# EUROPEAN PATENT APPLICATION

(11) **EP 4 832 638 A1**
(43) Date of publication of application: **28.10.2026**
(21) Application number: 24911006.5
(22) Date of filing: 23.12.2024
(51) Int. Cl.: H04W 72/512

(54) **COMMUNICATION METHOD AND APPARATUS**

(30) Priority: 29.12.2023 CN 202311871607
(71) Applicant: Huawei Technologies Co., Ltd., Shenzhen, Guangdong 518129 (CN)
(72) Inventor: LI, Bingzhao, Shenzhen, Guangdong 518129 (CN); CHANG, Junren, Shenzhen, Guangdong 518129 (CN)
(74) Representative: Maiwald GmbH
(86) International application number: PCT/CN2024/141334
(87) International publication number: WO 2025/140078

(57) **Abstract**

This application relates to a communication method and apparatus. A terminal apparatus receives first configuration information, where the first configuration information is used to configure a first radio bearer, and the first radio bearer is used to transmit a data packet of a first service. The terminal apparatus sends first indication information to an access network apparatus, where the first indication information indicates to accelerate transmission of a downlink data packet of the first service. Embodiments of this application can enable accelerated transmission of a part of data packets of a service, and enable normal transmission of other data packets. In this way, accelerated transmission of the data packets can reduce a black edge effect, and normal transmission of the other data packets can reduce impact on a network. This is equivalent to that embodiments of this application implement a balance between network capacity and user experience in a sense.

## Description

### CROSS-REFERENCE TO RELATED APPLICATIONS

This application claims priority to Chinese Patent Application No. 202311871607.2, filed with the China National Intellectual Property Administration on December 29, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of technologies, higher requirements may be imposed on a delay on a network device side in some service scenarios. For example, virtual reality (virtual reality, VR) is a technology using cloud capabilities for rendering. On a user side, data is collected from a controller and a helmet, and then transmitted to a server over a network. The server performs graphics rendering based on the motion and view of the user, encodes and compresses rendered data, and then transmits the encoded and compressed data to the user's local device over the network. The rendered data is then displayed on the local helmet. For VR experience, a motion-to-phonic (motion to phonic, MTP) delay needs to be controlled within a specific range, for example, within 20 ms, so that the user does not have a strong sense of dizziness. Therefore, how to meet a requirement of shortening a processing delay during processing in the foregoing service scenario becomes an urgent problem to be resolved.

### SUMMARY

Embodiments of this application provide a communication method and apparatus, to reduce impact of a network delay in a service processing process.

According to a first aspect, a communication method is provided. The method may be performed by a terminal apparatus. The terminal apparatus is, for example, a terminal device, another device including a function of the terminal device, or a chip system (or a chip) or another functional module. The chip system or the functional module can implement the function of the terminal device. The chip system or the functional module is, for example, disposed in the terminal device. The method includes: receiving first configuration information, where the first configuration information is used to configure a first radio bearer, and the first radio bearer is used to transmit a data packet of a first service; and sending first indication information to an access network apparatus, where the first indication information indicates to accelerate transmission of a downlink data packet of the first service.

In this embodiment of this application, the terminal apparatus may indicate the access network apparatus to accelerate transmission of the downlink data packet. For example, the terminal apparatus may notify the access network apparatus of accelerated transmission of the downlink data packet when the terminal apparatus considers that acceleration is required, and may not notify the access network apparatus of accelerated transmission of the downlink data packet when the terminal apparatus considers that acceleration is not required. For example, for a service, this embodiment of this application can enable accelerated transmission of a part of data packets of the service, and enable normal transmission of other data packets, thereby reducing impact on a network. This is equivalent to that this embodiment of this application implements a balance between network capacity and user experience in a sense.

In an optional implementation, the first configuration information is further used to configure a resource for transmitting the first indication information. The first configuration information is configured, so that the terminal apparatus can send the first indication information. Alternatively, the terminal apparatus may send the first indication information on the first radio bearer. In this case, the first configuration information may not need to configure a resource for transmitting the first indication information, to reduce overheads of the first configuration information.

In an optional implementation, the first indication information indicates the first service by using one or more of the following: an identifier of a data radio bearer for transmitting the first service; an identifier of a QoS flow for transmitting the first service; or an identifier of a logical channel for transmitting the first service. The first radio bearer may be used to transmit one or more services, the one or more services include the first service, and the first radio bearer may include one or more of the data radio bearer for transmitting the first service, the QoS flow for transmitting the first service, or the logical channel for transmitting the first service. In this case, the first indication information may indicate the first service by indicating one or more of the data radio bearer for transmitting the first service, the QoS flow for transmitting the first service, or the logical channel for transmitting the first service. Alternatively, the first indication information may indicate the first service in another manner, for example, indicate the first service by indicating an identifier of the first service. An indication manner is not limited.

In an optional implementation, sending the first indication information to the access network apparatus includes: when an indication from an application layer is received, sending the first indication information to the access network apparatus. When to start accelerated transmission of the downlink data packet, or when to send the first indication information to the access network apparatus may be determined by the terminal apparatus. For example, the determining process may be performed by the application layer (or referred to as a service layer) of the terminal apparatus. When determining that the downlink data packet needs to be accelerated for transmission, the application layer may send an indication to an access stratum of the terminal apparatus. After receiving the indication, the access stratum may send the first indication information to the access network apparatus.

In an optional implementation, the first indication information further indicates time at which the downlink data packet to be accelerated for transmission is expected to arrive at the access network apparatus. The downlink data packet to be accelerated for transmission may be sent by an application server, and arrives at the access network apparatus via a core network apparatus. When the terminal apparatus sends the first indication information, the downlink data packet to be accelerated for transmission may not arrive at the access network apparatus. In this case, the first indication information may indicate the time at which the downlink data packet to be accelerated for transmission is expected to arrive at the access network apparatus, so that the access network apparatus can clearly determine which downlink data packets are downlink data packets that need to be accelerated for transmission.

In an optional implementation, the method further includes: adjusting a DRX parameter of the terminal apparatus. The terminal apparatus can be in a non-sleep state for maximized time by performing corresponding processing on a DRX mechanism, to receive the downlink data packet accelerated for transmission, thereby reducing a packet loss rate.

In an optional implementation, adjusting the DRX parameter of the terminal apparatus includes: when a first time offset after sending of the first indication information arrives, adjusting the DRX parameter of the terminal apparatus. Considering that the access network device may accelerate transmission of the downlink data packet only after the terminal apparatus sends the first indication information for a period of time, optionally, the terminal apparatus may adjust the DRX parameter when the first time offset after sending of the first indication information arrives. In this way, parameter adjustment by the terminal apparatus is more in accordance with an accelerated transmission mechanism of the downlink data packet, and the terminal apparatus can also reduce power consumption by using the normal DRX mechanism for maximized time.

In an optional implementation, the method further includes: receiving second indication information from the access network apparatus, where the second indication information indicates to adjust the DRX parameter of the terminal apparatus. DRX adjustment by the terminal apparatus may be autonomously determined by the terminal apparatus, or may be performed under an indication of the access network apparatus, so that the access network apparatus and the terminal apparatus perform adjustment consistently.

In an optional implementation, the method further includes: deactivating a measurement gap of the terminal apparatus, where the measurement gap is used for an inter-frequency measurement and/or an intra-frequency measurement. Through deactivation of the measurement gap, the terminal apparatus may not perform measurement, thereby improving a receiving success rate of the terminal apparatus for the downlink data packet accelerated for transmission.

In an optional implementation, the method further includes: receiving third indication information from the access network apparatus, where the third indication information indicates to deactivate the measurement gap. Processing of the measurement gap by the terminal apparatus may be autonomously determined by the terminal apparatus, or may be performed under an indication of the access network apparatus, so that the access network apparatus and the terminal apparatus perform processing consistently.

In an optional implementation, that the first indication information indicates to accelerate transmission of the downlink data packet includes: The first indication information indicates a first delay budget, and the first delay budget is used by the access network apparatus to schedule the downlink data packet to be accelerated for transmission. The access network apparatus may schedule downlink data packets to be accelerated for transmission based on the first delay budget, thereby implementing accelerated transmission of these downlink data packets. The first delay budget may be predefined in a protocol, or may be preconfigured in the access network apparatus, or may be indicated by the core network apparatus or the terminal apparatus. If the indication is performed by the terminal apparatus, one indication manner is that the terminal apparatus sends the first delay budget to the access network apparatus, thereby indicating, to the access network apparatus, the delay budget for scheduling the downlink data packet accelerated for transmission, and also implicitly indicating accelerated transmission of the downlink data packet.

In an optional implementation, the first indication information is included in RRC control signaling, or included in user plane control signaling, or included in a header of a user plane data packet. Alternatively, the first indication information may be further included in other signaling sent by the terminal apparatus. This is not limited.

In an optional implementation, the user plane control signaling includes one or more of the following: MAC control signaling, RLC control signaling, PDCP control signaling, or physical layer control signaling. The foregoing signaling may also have other names. For example, a name of a protocol layer may be changed. In addition, the user plane control signaling may further include control signaling of another protocol layer. This is not limited.

In an optional implementation, the user plane data packet includes one or more of the following: a MAC data packet, an RLC data packet, a PDCP data packet, or an SDAP data packet. The foregoing data packets may also have other names, for example, a name of a protocol layer may be changed. In addition, the user plane data packet may further include a data packet of another protocol layer. This is not limited.

In an optional implementation, the method further includes: sending fourth indication information to the access network apparatus, where the fourth indication information indicates to stop accelerated transmission of the downlink data packet of the first service. This embodiment of this application can indicate accelerated transmission of the downlink data packet, and also indicate to stop accelerated transmission of the downlink data packet, so that the downlink data packet that needs to be accelerated can be accelerated for transmission, and the downlink data packet that does not need to be accelerated can be transmitted normally. This can meet service and user requirements, and reduce network pressure.

In an optional implementation, the method further includes: adjusting the DRX parameter of the terminal apparatus. For example, if the terminal apparatus adjusts the DRX parameter during accelerated transmission, the DRX parameter may be adjusted again when accelerated transmission is stopped. For example, one adjustment manner is to restore the DRX parameter of the terminal apparatus, to reduce power consumption of the terminal apparatus.

In an optional implementation, the method further includes: receiving fifth indication information from the access network apparatus, where the fifth indication information indicates to adjust the DRX parameter of the terminal apparatus. DRX adjustment by the terminal apparatus may be autonomously determined by the terminal apparatus, or may be performed under an indication of the access network apparatus, so that the access network apparatus and the terminal apparatus perform adjustment consistently.

In an optional implementation, the method further includes: activating a measurement gap of the terminal apparatus, where the measurement gap is used for an inter-frequency measurement and/or an intra-frequency measurement. For example, if the terminal apparatus deactivates a measurement gap during accelerated transmission, a measurement gap may be activated when accelerated transmission is stopped, so that the terminal apparatus can perform measurement.

In an optional implementation, the method further includes: receiving sixth indication information from the access network apparatus, where the sixth indication information indicates to activate the measurement gap. Activation of the measurement gap by the terminal apparatus may be autonomously determined by the terminal apparatus, or may be performed under an indication of the access network apparatus, so that the access network apparatus and the terminal apparatus perform activation consistently.

According to a second aspect, another communication method is provided. The method may be performed by an access network apparatus. The access network apparatus is, for example, an access network device, another device including a function of the access network device, or a chip system (or a chip) or another functional module. The chip system or the functional module can implement the function of the access network device. The chip system or the functional module is, for example, disposed in the access network device. Optionally, the access network device is, for example, a base station or another device in an access network. The method includes: sending first configuration information to a terminal apparatus, where the first configuration information is used to configure a first radio bearer, and the first radio bearer is used to transmit a data packet of a first service; and receiving first indication information from the terminal apparatus, where the first indication information indicates to accelerate transmission of a downlink data packet of the first service.

In an optional implementation, the first configuration information is further used to configure a resource for transmitting the first indication information.

In an optional implementation, the method further includes: scheduling a first downlink data packet of the first service based on a first delay budget, where the first downlink data packet is a downlink data packet to be accelerated for transmission, the first delay budget belongs to a delay range indicated by a PDB of the first service, and a difference between the first delay budget and a lower limit of the delay range is less than a second threshold, or a PDB corresponding to the first delay budget is less than the PDB corresponding to the first service.

In an optional implementation, the first indication information indicates the first service by using one or more of the following: an identifier of a data radio bearer for transmitting the first service; an identifier of a QoS flow for transmitting the first service; or an identifier of a logical channel for transmitting the first service.

In an optional implementation, the first indication information further indicates time at which the downlink data packet to be accelerated for transmission is expected to arrive at the access network apparatus.

In an optional implementation, the method further includes: accelerating transmission of the downlink data packet that is of the first service and that is received after the time indicated by the first indication information.

In an optional implementation, the method further includes: sending second indication information to the terminal apparatus, where the second indication information indicates to adjust a DRX parameter of the terminal apparatus.

In an optional implementation, the method further includes: sending third indication information to the terminal apparatus, where the third indication information indicates to deactivate a measurement gap of the terminal apparatus, and the measurement gap is used for an inter-frequency measurement and/or an intra-frequency measurement.

In an optional implementation, that the first indication information indicates to accelerate transmission of the downlink data packet includes: The first indication information indicates the first delay budget, and the first delay budget is used by the access network apparatus to schedule the downlink data packet to be accelerated for transmission.

In an optional implementation, the method further includes: determining that a downlink data packet that is of the first service and that is received from time when a first time offset after receiving of the first indication information arrives is the downlink data packet to be accelerated for transmission; or determining the downlink data packet to be accelerated for transmission based on the time at which the downlink data packet to be accelerated for transmission is expected to arrive at the access network apparatus; or receiving the first downlink data packet of the first service, where the first downlink data packet includes an acceleration indication, and the acceleration indication indicates that the first downlink data packet is the downlink data packet to be accelerated for transmission. The access network apparatus may determine which downlink data packets are downlink data packets that need to be accelerated for transmission, or determine a downlink data packet from which accelerated transmission is started based on the first indication information from the terminal apparatus; and/or the access network apparatus may determine which downlink data packets are downlink data packets that need to be accelerated for transmission, or determine a downlink data packet from which accelerated transmission is started based on a downlink data packet from a core network apparatus. The manner is flexible.

In an optional implementation, the acceleration indication is information about the first delay budget, and the first delay budget is used by the access network apparatus to schedule the downlink data packet to be accelerated for transmission.

In an optional implementation, the first indication information is included in RRC control signaling, or included in user plane control signaling, or included in a header of a user plane data packet.

In an optional implementation, the user plane control signaling includes one or more of the following: MAC control signaling, RLC control signaling, PDCP control signaling, or physical layer control signaling.

In an optional implementation, the user plane data packet includes one or more of the following: a MAC data packet, an RLC data packet, a PDCP data packet, or an SDAP data packet.

In an optional implementation, the method further includes: receiving fourth indication information from the terminal apparatus, where the fourth indication information indicates to stop accelerated transmission of the downlink data packet of the first service; or receiving seventh indication information from the core network apparatus, where the seventh indication information indicates to stop accelerated transmission of the downlink data packet of the first service; or receiving a third downlink data packet of the first service, where the third downlink data packet does not include an acceleration indication, to indicate to stop accelerated transmission of the downlink data packet of the first service. The access network apparatus may determine which downlink data packets are downlink data packets whose accelerated transmission needs to be stopped, or determine a downlink data packet from which accelerated transmission is stopped based on the fourth indication information from the terminal apparatus; and/or the access network apparatus may determine which downlink data packets are downlink data packets whose accelerated transmission needs to be stopped, or determine a downlink data packet from which accelerated transmission is stopped based on the downlink data packet from the core network apparatus. The manner is flexible.

In an optional implementation, the seventh indication information is included in a fourth downlink data packet of the first service.

In an optional implementation, the method further includes: sending fifth indication information to the terminal apparatus, where the fifth indication information indicates to adjust the DRX parameter of the terminal apparatus.

In an optional implementation, the method further includes: sending sixth indication information to the terminal apparatus, where the sixth indication information indicates to activate a measurement gap of the terminal apparatus, and the measurement gap is used for an inter-frequency measurement and/or an intra-frequency measurement.

For technical effects brought by the second aspect or the optional implementations, refer to the descriptions of the technical effects of the first aspect or the corresponding implementations.

According to a third aspect, another communication method is provided. The method may be performed by an application server. The application server is, for example, a server device, another device including a function of the application server, or a chip system (or a chip) or another functional module. The chip system or the functional module can implement a function of the application server. The chip system or the functional module is, for example, disposed in the application server. Optionally, the application server may execute a first service. The method includes: receiving a first uplink data packet corresponding to the first service from a terminal apparatus; determining that a variation of a value of a first parameter corresponding to the first uplink data packet relative to a value of the first parameter corresponding to a second uplink data packet is greater than a first threshold, where the second uplink data packet is an uplink data packet that is of the first service and that is most recently received from the terminal apparatus; and sending a first downlink data packet corresponding to the first uplink data packet, where the first downlink data packet includes an acceleration indication, and the acceleration indication indicates to accelerate transmission of the first downlink data packet. The application server may determine whether the downlink data packet needs to be accelerated for transmission, so that the acceleration indication may be sent by using the downlink data packet, and an access network device can accelerate transmission of the downlink data packet. For example, for a service, this embodiment of this application can enable accelerated transmission of a part of data packets of the service, and enable normal transmission of other data packets, thereby reducing impact on a network. This is equivalent to that this embodiment of this application implements a balance between network capacity and user experience in a sense.

In an optional implementation, the first downlink data packet further includes information about a first delay budget, and the first delay budget is used by the access network apparatus to schedule the first downlink data packet. The first delay budget may be predefined by using a protocol, or may be preconfigured in the access network apparatus, or may be configured by the core network apparatus or the terminal apparatus. If the first delay budget is configured by the core network apparatus, a configuration manner is, for example, carrying the information about the first delay budget in a downlink data packet that needs to be accelerated for transmission. For example, the acceleration indication is the information about the first delay budget, so that the information about the first delay budget indicates the first delay budget, and also implicitly indicates to accelerate transmission of the downlink data packet, and overheads of the downlink data packet can be reduced. For another example, the downlink data packet may include the information about the first delay budget and the acceleration indication, and separate indication can be more explicit.

In an optional implementation, the method further includes: receiving a third uplink data packet of the first service from the terminal apparatus; determining that a variation of a value of a first parameter corresponding to the third uplink data packet relative to a value of the first parameter corresponding to a fourth uplink data packet is less than or equal to a first threshold, where the fourth uplink data packet is an uplink data packet that is of the first service and that is most recently received from the terminal apparatus; and sending a third downlink data packet corresponding to the third uplink data packet, where the third downlink data packet does not include an acceleration indication, to indicate to stop accelerated transmission of the third downlink data packet, or the third downlink data packet includes seventh indication information, and the seventh indication information indicates to stop accelerated transmission of the downlink data packet. The application server may determine whether accelerated transmission of the downlink data packet needs to be stopped, so that the seventh indication information may be sent by using the downlink data packet, and the access network device can stop accelerated transmission. For example, for a service, this embodiment of this application can enable accelerated transmission of a part of data packets of the service, and enable normal transmission of other data packets. In this way, the data packets accelerated for transmission can arrive at a receive end as soon as possible, thereby reducing a transmission delay. In addition, normal transmission of the other data packets can reduce impact on the network. This is equivalent to that this embodiment of this application implements a balance between network capacity and user experience in a sense.

According to a fourth aspect, a communication apparatus is provided. The communication apparatus may be the terminal apparatus according to any one of the first aspect to the third aspect. The communication apparatus has a function of the foregoing terminal apparatus. The communication apparatus is, for example, a terminal device, another device including a function of the terminal device, a chip system (or a chip), or another functional module. The chip system or the functional module can implement the function of the terminal device. The chip system or the functional module is, for example, disposed in the terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive first configuration information, where the first configuration information is used to configure a first radio bearer, and the first radio bearer is used to transmit a data packet of a first service; and the transceiver unit (or the sending unit) is configured to send first indication information to an access network apparatus, where the first indication information indicates to accelerate transmission of a downlink data packet of the first service.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the terminal apparatus according to any one of the first aspect to the third aspect.

According to a fifth aspect, a communication apparatus is provided. The communication apparatus may be the access network apparatus according to any one of the first aspect to the third aspect. The communication apparatus has a function of the foregoing access network apparatus. The communication apparatus is, for example, an access network device, another device including a function of the access network device, or a chip system (or a chip) or another functional module. The chip system or the functional module can implement the function of the access network device. The chip system or the functional module is, for example, disposed in the access network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the fifth aspect.

In an optional implementation, the transceiver unit (or the sending unit) is configured to send first configuration information to a terminal apparatus, where the first configuration information is used to configure a first radio bearer, and the first radio bearer is used to transmit a data packet of a first service; and the transceiver unit (or the receiving unit) is configured to receive first indication information from the terminal apparatus, where the first indication information indicates to accelerate transmission of a downlink data packet of the first service.

In an optional implementation, the communication apparatus further includes a storage unit (sometimes also referred to as a storage module). The processing unit is configured to: be coupled to the storage unit, and execute a program or instructions in the storage unit, so that the communication apparatus is enabled to perform a function of the access network apparatus according to any one of the first aspect to the third aspect.

According to a sixth aspect, a communication apparatus is provided. The communication apparatus may be the application server according to any one of the first aspect to the third aspect. The communication apparatus has a function of the foregoing application server. The communication apparatus is, for example, a server device, another device including a function of the application server, or a chip system (or a chip) or another functional module. The chip system or the functional module can implement a function of the application server. The chip system or the functional module is, for example, disposed in the application server. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the fifth aspect.

In an optional implementation, the transceiver unit (or the receiving unit) is configured to receive a first uplink data packet corresponding to the first service from a terminal apparatus; the processing unit is configured to determine that a variation of a value of a first parameter corresponding to the first uplink data packet relative to a value of the first parameter corresponding to a second uplink data packet is greater than a first threshold, where the second uplink data packet is an uplink data packet that is of the first service and that is most recently received from the terminal apparatus; and the transceiver unit (or the sending unit) is configured to send a first downlink data packet corresponding to the first uplink data packet, where the first downlink data packet includes an acceleration indication, and the acceleration indication indicates to accelerate transmission of the first downlink data packet.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the application server according to any one of the first aspect to the third aspect.

According to a seventh aspect, a communication apparatus is provided. The communication apparatus may be a terminal device, or may be a chip or a chip system used in the terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal apparatus in the foregoing aspects.

According to an eighth aspect, a communication apparatus is provided. The communication apparatus may be an access network device, or may be a chip or a chip system used in the access network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the access network apparatus in the foregoing aspects.

According to a ninth aspect, a communication apparatus is provided. The communication apparatus may be a server device, or may be a chip or a chip system used in an application server device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the application server in the foregoing aspects.

According to a tenth aspect, a communication system is provided, including a terminal apparatus and an access network apparatus, where the terminal apparatus is configured to perform the method performed by the terminal apparatus according to any one of the first aspect to the third aspect, and the access network apparatus is configured to perform the method performed by the access network apparatus according to any one of the first aspect to the third aspect. For example, the terminal apparatus may be implemented by the communication apparatus according to the fourth aspect or the seventh aspect, and the access network apparatus may be implemented by the communication apparatus according to the fifth aspect or the eighth aspect.

Optionally, the communication system may further include another apparatus or device, for example, include an application server. The application server is configured to perform the method performed by the application server according to any one of the first aspect to the third aspect. For example, the application server may be implemented by the communication apparatus according to the sixth aspect or the ninth aspect.

According to an eleventh aspect, a computer-readable storage medium is provided. The computer-readable storage medium is configured to store a computer program or instructions. When the computer program or the instructions are run, the method performed by the terminal apparatus and/or the access network apparatus and/or the application server in the foregoing aspects is implemented.

According to a twelfth aspect, a computer program product including instructions is provided. When a computer program or the instructions are run on a computer, the method according to the foregoing aspects is implemented.

According to a thirteenth aspect, a chip system is provided, and includes a processor and an interface. The processor is configured to invoke instructions from the interface and run the instructions, to enable the chip system to implement the methods according to the foregoing aspects.

### BRIEF DESCRIPTION OF DRAWINGS

FIG. 1 is a diagram of a VR service processing process;
FIG. 2 is a diagram of an application scenario according to an embodiment of this application;
FIG. 3 is a flowchart of a communication method according to an embodiment of this application;
FIG. 4 is a diagram of an accelerated transmission process according to an embodiment of this application;
FIG. 5 is a diagram of an apparatus according to an embodiment of this application; and
FIG. 6 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, "a and b", "a and c", "b and c", or "a, b, and c", where a, b, and c may be singular or plural.

Ordinal numbers such as "first" and "second" mentioned in embodiments of this application are intended to distinguish between a plurality of objects, but are not intended to limit sizes, content, a sequence, a time sequence, priorities, importance degrees, or the like of the plurality of objects. In addition, step numbers in embodiments described in this application are merely for distinguishing between different steps, but are not for limiting a sequence of the steps. For example, S301 may be performed before S302, may be performed after S302, or may be performed simultaneously with S302.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, a terminal device in a scenario, including but not limited to the following scenarios: a sensing scenario, cellular communication, device-to-device (device-to-device, D2D) communication, vehicle to everything (vehicle to everything, V2X), machine-to-machine/machine-type communication (machine-to-machine/machine-type communications, M2M/MTC), an internet of things (internet of things, IoT), VR, augmented reality (augmented reality, AR), industrial control (industrial control), self driving (self driving), remote medical (remote medical), smart grid (smart grid), smart furniture, smart office, smart wearable, smart transportation, smart city (smart city), uncrewed aerial vehicle, robot, and indoor commercial scenarios (such as mobile phone projection, file sharing, and video transmission from a mobile phone to VR glasses). The terminal device may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device in D2D communication, for example, an electricity meter or a water meter.

In addition, in embodiments of this application, the terminal device may alternatively be a terminal device in an IoT system. An IoT is an important part of future development of information technology, and is mainly technically characterized in that things are connected to networks by using communication technologies, to implement intelligent networks of human-machine interconnection and thing-thing interconnection.

If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board unit, OBU). The terminal device in this application may be a vehicle-mounted module, a vehicle-mounted assembly, a vehicle-mounted component, a vehicle-mounted chip, or an on-board unit that is built in a vehicle as one or more components or units. The vehicle may implement a method in this application by using the vehicle-mounted module, the vehicle-mounted assembly, the vehicle-mounted component, the vehicle-mounted chip, or the on-board unit that is built in the vehicle.

The terminal device sometimes may be referred to as a UE, a terminal, an access station, a UE station, a remote station, a wireless communication device, a user apparatus, or the like.

In embodiments of this application, a communication apparatus configured to implement a function of the terminal device may be the terminal device, or may be an apparatus that can support the terminal device in implementing the function, for example, a chip system. The apparatus may be mounted in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (the next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). The following uses an example in which the access network device is a base station for description. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. For ease of description, in embodiments of this application, the CU, the CU-CP, the CU-UP, the DU, and the RU are used as examples for description. Any one of the CU (or the CU-CP and the CU-UP), the DU, and the RU in embodiments of this application may be implemented by a software module, a hardware module, or a combination of a software module and a hardware module.

Optionally, in embodiments of this application, if the network device is in a distributed architecture, for example, the network device includes a CU and a DU, or includes a CU-CP, a CU-UP, and a DU, that the network device sends information to the UE may be specifically that the DU included in the network device sends information to the UE; and that the network device receives information from the UE may be specifically that the DU included in the network device receives information from the UE.

In embodiments of this application, a communication apparatus configured to implement a function of the network device may be the network device, or may be an apparatus that can support the network device in implementing the function, for example, a chip system. The apparatus may be installed in the network device. For example, a communication apparatus configured to implement a function of the access network device may be an access network device, or may be an apparatus that can support the access network device in implementing the function, for example, a chip system. The apparatus may be installed in the access network device. For another example, a communication apparatus configured to implement a function of the core network device may be an access network device, or may be an apparatus that can support the core network device in implementing the function, for example, a chip system. The apparatus may be installed in the core network device. In the technical solutions provided in embodiments of this application, an example in which an apparatus configured to implement a function of the access network device is an access network device and an apparatus configured to implement a function of the core network device is a core network device is used to describe the technical solutions provided in embodiments of this application.

The following describes technical features in embodiments of this application.

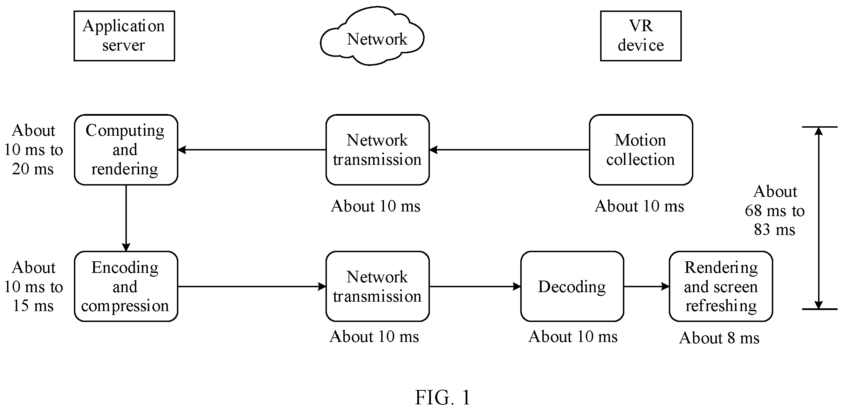

Cloud VR is a technology using cloud capabilities for rendering. FIG. 1 is a process of processing data of a VR service. On a user side (for example, a VR device side), user data may be collected, for example, motion data of the user is collected. The collection time is, for example, about 10 milliseconds (ms). The motion data is transmitted to a server (for example, an application server configured to process a VR application) over a network, and a delay in the transmission process is, for example, about 10 ms. The server may perform image rendering based on the motion data, and the rendering process lasts for about 10 ms to 20 ms. The server encodes and compresses rendered image. This process lasts for about 10 ms to 15 ms. The server transmits the encoded and compressed image to the user side over the network, and a delay of the transmission process is, for example, about 10 ms. The user side may decode the encoded and compressed image that is received, and the process lasts for about 10 ms. The user side performs processing such as rendering and screen refreshing on a decoded image (the process lasts for about 8 ms), to display a new image for the user. Total duration of processing the data of the VR service is referred to as an end-to-end delay of the VR service. It can be learned that currently, the end-to-end delay is about 68 milliseconds (ms) to 83 ms.

For VR experience, if an MTP is controlled within 20 ms, that is, if the end-to-end delay of the VR service can be controlled within 20 ms, the delay may be accepted by the user, and the user may not have a strong sense of dizziness. However, it can be learned from FIG. 1 that an end-to-end delay of a current VR service is far beyond the requirement. Therefore, an ATW technology is introduced to shorten an MTP delay. The ATW technology may perform a view offset on an image cached by UE, so that a new image obtained through the view offset may be obtained based on the cached image and displayed to the user. In this way, the VR device may display an image based on the locally cached image even if the VR device has not received the new image over the network, thereby reducing dependence on network processing time and improving user experience.

However, in a real scene, after the view offset is performed, some new scenes may appear in a field of view. However, when the view offset is performed based on the cached image, the new scene that was expected to appear cannot be displayed, resulting in a black edge effect. A black edge ratio is related to real-time performance of the cached image, and higher real-time performance of the image indicates a lower black edge ratio. The real-time performance of the cached image is affected by the network transmission delay, and a smaller network transmission delay indicates higher real-time performance of the image. According to historical research experience, to control the black edge ratio of 15%, the network transmission delay needs to be within 20 ms. Therefore, the total delay required by uplink and downlink transmission of the VR service on the 5G network is usually 20 ms. If the transmission delay on the 5G network can meet this requirement, the black edge ratio can be basically controlled within an acceptable range (for example, 15%). If experience needs to be further optimized, the network transmission delay needs to be further reduced. For example, if the black edge ratio is required to reach 10%, the network transmission delay needs to be less than 5 ms.

Therefore, to reduce the black edge effect, the network transmission delay needs to be reduced. However, reducing the network transmission delay has a great impact on the network and also affects network capacity. Therefore, it is difficult to implement this function.

In view of this, in this embodiment of this application, it is considered that a black edge is mainly caused by a difference between a real-time posture of the user and a posture corresponding to an image in the cache. A larger difference indicates a larger black edge. However, the posture difference is not constant, but is greatly affected by a motion amplitude of the user. For example, at a time point at which the motion amplitude of the user is large, a black edge ratio is large; and at a time point at which the motion amplitude of the user is small, a black edge ratio is small. For example, the VR device is a helmet. According to statistics in this embodiment of this application, it is found that the user does not have a large motion amplitude for long time during use of the helmet. For example, if a case in which a rotational angular velocity of the helmet is greater than 50°/s is considered as a large motion amplitude, motion time with the angular velocity greater than 50°/s accounts for less than 10% of the total headset usage time. Therefore, this embodiment of this application proposes that reducing the network transmission delay may not need to be performed for all data packets, but may need to be performed only for a data packet with a large motion amplitude of the user. Therefore, a black edge effect can be reduced, and a requirement on network transmission can be reduced.

For example, in this embodiment of this application, the UE may indicate an access network device to accelerate transmission of a downlink data packet. For example, the UE may notify the access network device of accelerated transmission of the downlink data packet when the UE considers that acceleration is required, and may not notify the access network device of accelerated transmission of the downlink data packet when the UE considers that acceleration is not required. For example, for a service, this embodiment of this application can enable accelerated transmission of a part of data packets of the service, and enable normal transmission of other data packets. In this way, accelerated transmission of the data packets can reduce a black edge effect, and normal transmission of the other data packets can reduce impact on the network. This is equivalent to that this embodiment of this application implements a balance between network capacity and user experience in a sense.

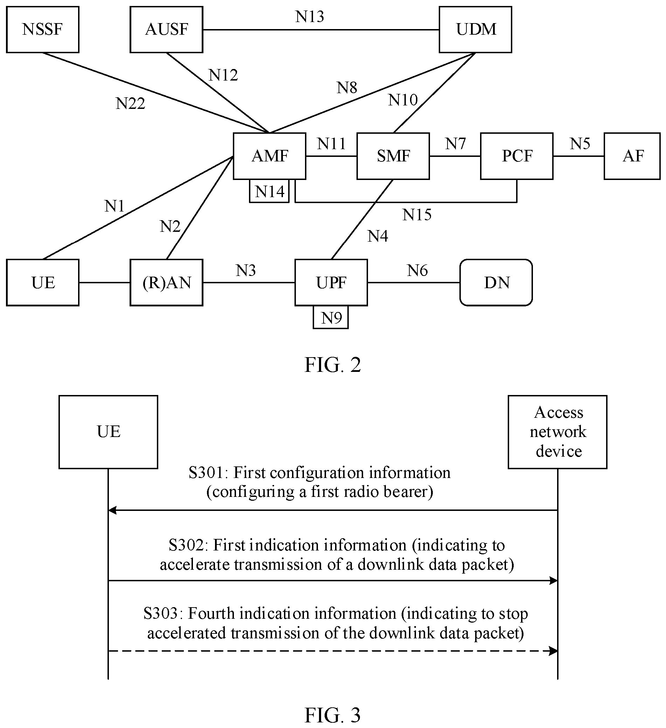

FIG. 2 is a diagram of a 5G network architecture. The network architecture is a network architecture to which an embodiment of this application is applied. The 5G network architecture shown in FIG. 2 may include three parts: a UE part, a data network (data network, DN) part, and an operator network part.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, an SMF network element, a (radio) access network (radio access network, (R)AN), a user plane function (user plane function, UPF) network element, or the like.

The operator network includes a radio access network and a core network. The UE accesses the core network through the (R)AN, and the core network includes a user plane network element and a control plane network element. The user plane network element of the core network includes the UPF, and the control plane network element of the core network includes at least one of the AUSF, the AMF, the SMF, an NSSF, the NEF, the NRF, the UDM, the PCF, the AF, or the like.

The user plane network element (for example, the UPF) is mainly responsible for data packet forwarding, quality of service (quality of service, QoS) control, charging information statistics collection, and the like. The control plane network element is mainly responsible for service procedure interaction, and delivering a data packet forwarding policy, a QoS control policy, and the like to a user plane. In embodiments of this application, it is considered that a device like a sensor may access the core network through a device like the UE, and the (R)AN, so that a controller connected to a device like the sensor in industrial Ethernet can perform industrial data communication on the user plane through the UPF.

A control plane of the core network may use the service-based architecture, to be specific, a point-to-point communication mode in a conventional architecture is replaced with a service invoking mode for interaction between control plane network elements. In the service-based architecture, a control plane network element exposes a service to another control plane network element for invoking by the another control plane network element. In point-to-point communication, a set of specific messages exist in a communication interface between control plane network elements, and can be used only by control plane network elements at two ends of the interface during communication.

Functions of the network elements in the core network are described as follows:

The UPF supports all or a part of the following functions: interconnection between a protocol data unit (protocol data unit, PDU) session and a data network, packet routing and forwarding (for example, supporting uplink classifier (uplink classifier) on traffic and forwarding the traffic to a data network, and supporting a branching point (branching point) to support a multi-homed (multi-homed) PDU session), or data packet detection.

The AMF performs access management and mobility management on the UE, and is responsible for status maintenance of the UE, reachability management of the UE, forwarding of a non-mobility management (mobility management, MM) non-access-stratum (non-access-stratum, NAS) message, and forwarding of a session management (session management, SM) N2 message.

The SMF performs session management on the UE, and allocates and releases a resource for a session of the UE. The resource includes session quality of service (quality of service, QoS), a session path, a forwarding rule, and the like. The SMF is responsible for selecting or reselecting a UPF, allocating an internet protocol (Internet protocol, IP) address, establishing, modifying, and releasing a bearer, and the like.

The NEF exposes a network function to a third party through a northbound application programming interface (application programming interface, API).

The NRF stores and selects network function entity information for another network element.

The PCF performs user policy management, and is configured to generate and manage users, sessions, and QoS flow handling policies.

AF, namely, application management: provides an application layer service for the UE. When providing the service for the UE, the AF has requirements for QoS (policy (policy)) and charging (charging) policies and needs to notify the network. In addition, the AF also needs a core network to feed back application-related information.

Related interfaces between the network elements/functions in embodiments of this application include:
N1: It is an interface between the UE and the control plane of the core network.
N2: It is a communication interface between the (R)AN and the control plane of the core network.
N3: It is a communication interface between the (R)AN and the UPF, and is configured to transmit user plane data.
N4: It is a communication interface between the SMF and the UPF, and is used by the SMF to perform policy configuration and the like for the UPF.
N6: It is a communication port between the UPF and the DN.

The following describes, with reference to accompanying drawings, methods provided in embodiments of this application. The method in embodiments of this application may be applied to an ATW technology. To be specific, when the ATW technology is applied, the method in embodiments of this application may be applied to reduce a black edge effect and reduce impact on a network. Alternatively, when the ATW technology is not applied, the method in embodiments of this application may be applied to reduce a network transmission delay of a part of data packets and reduce impact on a network. In accompanying drawings corresponding to embodiments of this application, all steps represented by dashed lines are optional steps. In addition, a service (for example, a first service described below) in embodiments of this application may be a VR service, an extended reality (extended reality, XR) service, an augmented reality (augmented reality, AR) service, a mixed reality (Mixed Reality, MR) service, or the like, or may be another type of service. This is not limited herein.

Embodiments of this specification may be applied to a network architecture shown in FIG. 2. For example, UE described in embodiments of this specification may be the UE in FIG. 2, an access network device described in embodiments of this specification may be the (R)AN in FIG. 2, a core network device described in embodiments of this specification may be the UPF in FIG. 2, and an application server described in embodiments of this specification may be located in the DN in FIG. 2.

An embodiment of this application provides a communication method. FIG. 3 is a flowchart of the method.

S301: An access network device sends first configuration information to a terminal apparatus. Correspondingly, the terminal apparatus receives the first configuration information.

The terminal apparatus is, for example, a terminal device, UE, or another device including a function of the terminal device, or a chip system (or a chip) or another functional module. The chip system or the functional module can implement a function of the terminal device. The chip system or the functional module is, for example, disposed in the terminal device. The following uses UE as an example for description.

The first configuration information may configure a first radio bearer (radio bearer, RB) for the UE, and the first radio bearer may be used to transmit one or more services. The one or more services include, for example, a first service. Optionally, if the first radio bearer is used to transmit a plurality of services, the first radio bearer may include a plurality of radio bearers. For example, the plurality of radio bearers may be in a one-to-one correspondence with the plurality of services. That is, one radio bearer may be used to transmit one service, or one radio bearer may be used to transmit a plurality of services. In the one or more services, different services may have a same type, for example, are all extended reality (extended reality, XR) services. The XR service includes, for example, one or more of a VR service, a mixed reality (mixed reality, MR) service, or an augmented reality (augmented reality, AR) service. Alternatively, in the one or more services, different services may have different types. For example, the one or more services may include an XR service, or may include another type of service. This is not specifically limited. The first service is, for example, an XR service, or may be a service of another type.

The first radio bearer includes, for example, one or more of a data radio bearer (data radio bearer, DRB), a quality of service (quality of service, QoS) flow (flow), or a logical channel (logical channel, LCH). For example, because the one or more services include the first service, the first radio bearer may include one or more of the following: a DRB for transmitting the first service, a QoS flow for transmitting the first service, or a logical channel for transmitting the first service.

If the first radio bearer includes a plurality of the foregoing items, for example, includes an LCH and a QoS flow, or includes a DRB and an LCH, or includes an LCH, a DRB, and a QoS flow, the plurality of items may be configured by using one piece of configuration information (for example, the first configuration information is one piece of configuration information), or the plurality of items may be separately configured by using a plurality of pieces of configuration information (for example, the first configuration information includes a plurality of pieces of configuration information). If the plurality of items are configured by using one piece of configuration information, optionally, the plurality of items may be separately configured by using different information elements (information element, IE).

The LCH is a logical channel for transmitting data on a DRB, and data on one DRB may be transmitted through one or more LCHs. There is a correspondence between the QoS flow and the DRB, and data of the QoS flow may be transmitted on the DRB corresponding to the QoS flow.

For example, the first configuration information is included in higher layer signaling, and the higher layer signaling is, for example, radio resource control (radio resource control, RRC) signaling or a media access control (media access control, MAC) control element (control element, CE). Alternatively, the first configuration information may be included in physical layer signaling, and the physical layer signaling is, for example, downlink control information (downlink control information, DCI). Alternatively, the first configuration information may be included in signaling of another protocol layer. Optionally, if the first configuration information includes a plurality of pieces of information, the plurality of pieces of information may be included in a plurality of pieces of signaling of a same type, for example, all the pieces of information are included in RRC signaling; or the plurality of pieces of information may be included in different types of signaling, for example, some configuration information is included in RRC signaling, and some signaling is included in a MAC CE.

S302: The terminal apparatus sends first indication information to the access network device. Correspondingly, the access network device receives the first indication information.

The first indication information may be sent to the access network device on the first radio bearer, or may not be sent to the access network device on the first radio bearer. If the first indication information is not sent to the access network device on the first radio bearer, optionally, a resource for sending the first indication information may be further configured in the first configuration information. Alternatively, even if the first indication information is not sent on the first radio bearer, a resource for sending the first indication information may be preconfigured in the UE, or predefined by using a protocol, and does not need to be configured by the access network device. However, if the first indication information is sent to the access network device on the first radio bearer, because the first radio bearer is configured in the first configuration information, the first indication information may be sent on a resource of the first radio bearer. Therefore, the first configuration information may not need to additionally configure a resource for sending the first indication information, and the resource for sending the first indication information does not need to be configured in a manner such as protocol predefinition.

The first indication information indicates to accelerate transmission of a downlink data packet, so that the access network device clearly determines that there is a downlink data packet that needs to be accelerated for transmission. Correspondingly, the access network device may prepare a resource in advance. For example, if the first indication information does not indicate a related service or radio bearer, it may be considered by default that the first indication information corresponds to all radio bearers configured by the access network device for the UE, for example, the first radio bearer is included. To be specific, the first indication information indicates to accelerate transmission of the downlink data packet, and based on the first indication information, the access network device may determine that downlink data packets of a service transmitted on any radio bearer configured by the access network device for the UE needs to be accelerated for transmission.

Alternatively, if the first indication information does not indicate a related service or radio bearer, but the first indication information is sent on a corresponding radio bearer (for example, including one or more of a DRB, a QoS flow, or a logical channel), it may be considered by default that the first indication information corresponds to a radio bearer for sending the first indication information (for example, one or more of a DRB, a QoS flow, or a logical channel for sending the first indication information). For example, if the first indication information indicates to accelerate transmission of the downlink data packet, and the first indication information is sent to the access network device on the first radio bearer, based on that the first indication information is sent on the first radio bearer, the access network device determines that the downlink data packet of the service transmitted on the first radio bearer needs to be accelerated for transmission.

Alternatively, if the first indication information indicates a related service or radio bearer, based on the first indication information, the access network device may determine that downlink data packets of a service transmitted on the service or the radio bearer needs to be accelerated for transmission. For example, if the first indication information may indicate to accelerate transmission of a downlink data packet of the first service, the access network device may accelerate transmission of the downlink data packet of the first service; or if the first indication information does not indicate a service transmitted on the first radio bearer other than the first service, the access network device does not need to accelerate transmission of a downlink data packet of the another service transmitted on the first radio bearer. Optionally, the first indication information may indicate the first service by carrying one or more of the following information: an identifier of the first service, an identifier of a DRB for transmitting the first service, an identifier of a QoS flow for transmitting the first service, or an identifier of a logical channel for transmitting the first service.

For example, the first indication information indicates to accelerate transmission of the downlink data packet of the first service, and the first service is a VR service. The downlink data packet of the VR service includes, for example, an image rendered by an application server of the VR service. For example, after collecting motion data of a user, UE (for example, a VR device) sends the motion data to the application server via an access network device and a core network device. The application server performs image rendering based on the motion data, and sends a rendered image to the UE via the core network device and the access network device (the sent image may be an encoded and compressed image). The downlink data packet of the VR service may be sent by the application server to the UE, and may include the rendered image. That is, accelerated transmission described in this embodiment of this application may be performed on a downlink data packet. For example, after receiving a downlink data packet from the application server via the core network device, the access network device may perform accelerated transmission on the downlink data packet, so that the downlink data packet can arrive at the UE as early as possible.

Optionally, in addition to indicating to accelerate transmission of the downlink data packet (or indicating to accelerate transmission of the downlink data packet of the first service), the first indication information may further indicate other information. For example, the first indication information may further indicate time at which the downlink data packet to be accelerated for transmission is expected to arrive at the access network device; and based on the time indicated by the first indication information, the access network device may determine when to start accelerated transmission, or determine a downlink data packet from which accelerated transmission is started. The first indication information needs to indicate the time. For example, an indication manner is indicating a moment (a unit of the moment is, for example, hour, minute, second, millisecond, frame (frame), subframe (subframe), slot (slot), or orthogonal frequency division multiplexing (orthogonal frequency division multiplexing, OFDM) symbol). For example, the first indication information indicates a T1 slot. Alternatively, another manner of indicating the time by the first indication information is indicating a time offset (offset), for example, a time offset A. For example, the time offset A is 20 ms. The access network device may start timing when receiving the first indication information, and timing duration is the time offset A.

It can be learned from the foregoing that the downlink data packet to be accelerated for transmission may be sent by the application server, and arrives at the access network device via the core network device. When the UE sends the first indication information, the downlink data packet to be accelerated for transmission may not arrive at the access network device. In this case, the first indication information may indicate the time at which the downlink data packet to be accelerated for transmission is expected to arrive at the access network device, so that the access network device can clearly determine that a downlink data packet (or a downlink data packet corresponding to the first radio bearer) received from the time (for example, the time indicated by the first indication information, or the time at which the timing duration arrives) is the downlink data packet that needs to be accelerated for transmission; and a downlink data packet received before the time is not the downlink data packet that needs to be accelerated for transmission.

Optionally, the UE may determine the time or the time offset A indicated by the first indication information based on historical information. For example, the UE may determine historical transmission information of the data packet of the first service, and may determine a round trip delay of the data packet of the first service based on the historical transmission information. In addition, the UE may further determine an air interface delay between the UE and the access network device based on information such as channel quality between the UE and the access network device, and the UE may predict the time or the time offset A indicated by the first indication information based on the round trip delay and the air interface delay. The round trip delay of the data packet of the first service may include a delay from sending an uplink data packet of the first service by the UE to receiving a downlink data packet corresponding to the uplink data packet by the UE.

Optionally, the access network device needs to determine when to start accelerated transmission of the downlink data packet, or determine a downlink data packet from which accelerated transmission is started. This may be determined based on the time indicated by the first indication information, or may be determined in another manner. For example, if the first indication information does not indicate time, the access network device may determine that a downlink data packet (or a downlink data packet corresponding to the first radio bearer, or a downlink data packet corresponding to the first service) received from a moment at which the access network device receives the first indication information is the downlink data packet that needs to be accelerated for transmission; and a downlink data packet received before the time is not the downlink data packet that needs to be accelerated for transmission.

For another example, if the first indication information does not indicate time, the access network device may determine that a downlink data packet (or a downlink data packet corresponding to the first radio bearer, or a downlink data packet corresponding to the first service) received from time when a second time offset starting from time at which the first indication information is received arrives is the downlink data packet that needs to be accelerated for transmission; and a downlink data packet received before the time is not the downlink data packet that needs to be accelerated for transmission. The second time offset may be set by the access network device, or configured by the core network device, or predefined or preconfigured in the access network device by using a protocol.

Alternatively, in addition to the foregoing described manner, the access network device may determine when to start accelerated transmission of the downlink data packet, or determine a downlink data packet from which accelerated transmission is started in another manner. For example, the access network device may perform determining based on an acceleration indication, and the acceleration indication is, for example, included in the downlink data packet. For example, when the application server or the core network device sends a downlink data packet of the first service, if a downlink data packet (for example, a first downlink data packet) needs to be accelerated for transmission, the application server or the core network device may carry an acceleration indication in the first downlink data packet (for example, the acceleration indication is carried in a header of the first downlink data packet), where the acceleration indication may indicate that the first downlink data packet is the downlink data packet to be accelerated for transmission. The access network device may determine that the first downlink data packet is the downlink data packet that needs to be accelerated for transmission based on the acceleration indication. Optionally, if there are a plurality of downlink data packets that need to be accelerated for transmission, the application server or the core network device may carry the acceleration indication in each of the downlink data packets, or may carry the acceleration indication in one or more downlink data packets that are first sent.

For example, when the application server sends a downlink data packet of the first service, if a downlink data packet needs to be accelerated for transmission, the application server may carry an acceleration indication in a header of the downlink data packet, and based on whether the header of the data packet received from the application server carries the acceleration indication, the core network device may determine whether the downlink data packet needs to be accelerated for transmission. For example, if the application server sets an acceleration indication in a header of a downlink data packet, the core network device may determine that the downlink data packet needs to be accelerated based on the acceleration indication. If the core network device determines that a downlink data packet needs to be accelerated for transmission, the core network device may set an acceleration indication in a header of the downlink data packet sent to the access network device. An implementation of the acceleration indication set by the core network device may be the same as that of the acceleration indication set by the application server, for example, both are 1-bit information. Alternatively, implementations of the two acceleration indications may be different. This is not specifically limited. However, both the two acceleration indications indicate that a corresponding downlink data packet is the downlink data packet to be accelerated for transmission. For example, the downlink data packet from the application server is a downlink data packet 1, and a header of the downlink data packet 1 carries an acceleration indication; and the core network device encapsulates the downlink data packet 1. For example, the core network device adds a header to the downlink data packet 1 to obtain a downlink data packet 2. Because the core network device parses the header of the downlink data packet 1 to obtain the acceleration indication, the newly added header in the downlink data packet 2 may carry the acceleration indication, and the core network device sends the downlink data packet 2 to the access network device. The access network device may determine that the downlink data packet 2 is the downlink data packet to be accelerated for transmission based on the acceleration indication in the downlink data packet 2.

Alternatively, for example, the core network device may not need to re-encapsulate the downlink data packet, and may not need to determine whether the downlink data packet needs to be accelerated. For example, the core network device directly forwards the downlink data packet from the application server to the access network device. In this case, the access network device may determine that the downlink data packet needs to be accelerated for transmission based on a header of the received downlink data packet. For example, the downlink data packet from the application server is a downlink data packet 1, and a header of the downlink data packet 1 carries an acceleration indication; the core network device forwards the downlink data packet 1 to the access network device; and the access network device may determine that the downlink data packet 2 is the downlink data packet to be accelerated for transmission based on the acceleration indication in the downlink data packet 1.

Optionally, the acceleration indication occupies, for example, one bit. If a value of the bit is "1", it indicates that a corresponding downlink data packet needs to be accelerated for transmission; or if a downlink data packet carries the acceleration indication, it indicates that the downlink data packet needs to be accelerated for transmission. In this case, a quantity of bits occupied by the acceleration indication and a value of the acceleration indication are not limited. Alternatively, another implementation of the acceleration indication is, for example, that the acceleration indication includes information about a first delay budget, and the first delay budget may be used by the access network device to schedule the downlink data packet to be accelerated for transmission. The first delay budget is described below. That is, a downlink data packet may implicitly indicate that the downlink data packet is the downlink data packet that needs to be accelerated for transmission by using the information about the first delay budget.

An optional manner in which the application server needs to determine whether the downlink data packet needs to be accelerated is: determining whether to accelerate transmission of the downlink data packet based on a first parameter. For example, if a value of the first parameter is greater than or equal to a first threshold, or a variation of the value of the first parameter is greater than or equal to a second threshold, it may be determined that the downlink data packet needs to be accelerated for acceleration. The first threshold and/or the second threshold may be set by the application server, or configured by the access network device or the core network device, or preconfigured in the application server, or may be predefined by using a protocol. If both the application server and the UE use the first threshold, the two first thresholds may be equal; or if both the application server and the UE use the second threshold, the two second thresholds may be equal, so that the application server and the UE have a same result of determining whether acceleration is performed. The application server may determine the value of the first parameter based on data included in an uplink data packet received from the UE. For example, the application server may determine whether the value of the first parameter is greater than or equal to the first threshold based on data included in an uplink data packet from the UE, or may determine whether a variation of the value of the first parameter is greater than or equal to the second threshold based on data included in a plurality of uplink data packets from the UE.

Accelerated transmission in this embodiment of this application may mean that a transmission delay requirement of a downlink data packet that needs to be accelerated for transmission may be higher than a transmission delay requirement of a downlink data packet that does not need to be accelerated for transmission. For example, in this embodiment of this application, accelerated transmission is performed on a downlink data packet of the first service. In this case, a transmission delay requirement of the downlink data packet that is in downlink data packets of the first service and that needs to be accelerated for transmission may be higher than a transmission delay requirement of a downlink data packet that is in the downlink data packets of the first service and that does not need to be accelerated for transmission. Optionally, the operation of performing accelerated transmission of the downlink data packet by the access network device may further include one or more of the following: The access network device prepares a radio resource (for example, the radio resource includes a reserved resource) in advance for the data packet to be accelerated for transmission, deactivates DRX, or deactivates a measurement gap (GAP) of the UE. Processing such as deactivating DRX and/or deactivating GAP can ensure that the UE can monitor a downlink data packet in time as much as possible. These parameters will be described below.

Optionally, the access network device may schedule downlink data packets to be accelerated for transmission based on the first delay budget, thereby implementing accelerated transmission of these downlink data packets. For example, the downlink data packet of the first service needs to be accelerated for transmission. As an implementation of the first delay budget, the first delay budget may belong to a delay range indicated by a packet delay budget (packet delay budget, PDB) of the first service. Optionally, the PDB (for example, referred to as a second PDB) of the first service may be configured by the core network device. In this case, a PDB may not be reconfigured for the downlink data packet to be accelerated for transmission, and the second PDB originally corresponding to the first service may be still used. This can reduce a PDB configuration process, and the access network device may not need to switch between a plurality of PDBs. If the first delay budget belongs to the delay range indicated by the PDB of the first service, optionally, a difference between the first delay budget and a lower limit of the delay range may be less than a third threshold. The delay range may include a plurality of delays, and the plurality of delays include an upper limit and a lower limit of the delay range. In this case, the first delay budget may be selected from delays as close as possible to the lower limit.

For example, the second PDB is 10 ms, which means that after a downlink data packet of the first service arrives at the access network device, the access network device needs to schedule the downlink data packet within 10 ms (that is, send the downlink data packet). Whether the access network device sends the downlink data packet at the 2^{nd} ms or sends the downlink data packet at the 9^{th} ms, the PDB requirement is met. In conventional service transmission, the access network device may determine when to send the downlink data packet based on factors such as service load and/or a channel state of the access network device. If the downlink data packet is still not sent after the downlink data packet of the first service is received and the 10^{th} ms arrives, the access network device may discard the downlink data packet. In this embodiment of this application, when the second PDB remains unchanged, if some downlink data packets need to be accelerated for transmission, it means that scheduling time of these downlink data packets needs to be shortened as much as possible. For example, the second PDB is 10 ms, and the first delay budget may be 2 ms. That is, the access network device may send these downlink data packets at the 2^{nd} ms instead of sending these downlink data packets at the 9^{th} ms. This reduces scheduling time of these downlink data packets, thereby implementing accelerated transmission.

Alternatively, in another optional implementation of the first delay budget, a PDB corresponding to the first delay budget may be less than the second PDB. In this case, a corresponding PDB, for example, referred to as a first PDB, may be configured for the downlink data packet to be accelerated for transmission. For example, the core network device may configure the first PDB, so that the first PDB is less than the second PDB corresponding to the downlink data packet that is not accelerated for transmission. In this way, the access network device can more clearly determine the scheduling time. Optionally, configuration information of the second PDB and configuration information of the first PDB may be carried in a same configuration message, or may be separately carried in different configuration messages. For example, the second PDB is 10 ms, and the first PDB is, for example, 2 ms. In this case, if a downlink data packet of the first service arrives at the access network device based on the second PDB, the access network device needs to send the downlink data packet within 10 ms; and if the downlink data packet of the first service arrives at the access network device based on the first PDB, the access network device needs to send the downlink data packet within 2 ms. It can be learned that scheduling time of the downlink data packet to be accelerated can be shortened by reconfiguring the PDB, thereby implementing acceleration. A manner in which the first delay budget corresponds to the first PDB is as follows: The first delay budget is the first PDB. For example, if the first PDB is 2 ms, the first delay budget is 2 ms; or if the first delay budget may be included in a delay range indicated by the first PDB, for example, if the first PDB is 2 ms, the first delay budget may be a positive number less than or equal to 2 ms.

The first delay budget may be autonomously determined by the access network device. For example, the access network device may determine the first delay budget based on the second PDB. Alternatively, the first delay budget may be preconfigured in the access network device. Alternatively, the first delay budget may be predefined by using a protocol. Alternatively, the first delay budget may be indicated by the UE. For example, the UE may indicate the first delay budget to the access network device, so that the access network device can determine the first delay budget. Optionally, the UE indicates the first delay budget to the access network device. For example, a manner is that the first indication information indicates the first delay budget. For example, the first indication information includes information about the first delay budget. In this manner, it is equivalent to that the first indication information implicitly indicates, by indicating the first delay budget, that the downlink data packet needs to be accelerated for transmission.

Optionally, when to start accelerated transmission of the downlink data packet, or when to send the first indication information to the access network device may be determined by the UE. For example, the determining process may be performed by an application layer (or referred to as a service layer) of the UE, or may be performed by another protocol layer of the UE. The application layer is, for example, an application (application, APP) layer or an operating system (operating system, OS) layer of the UE. For example, the UE may determine whether to accelerate transmission of the downlink data packet based on a first parameter. For example, if a value of the first parameter is greater than or equal to a first threshold, or a variation of the value of the first parameter is greater than or equal to a second threshold, the UE may determine to accelerate transmission of the downlink data packet, or the UE may send the first indication information to the access network device. The first threshold and/or the second threshold may be set by the UE, or configured by the access network device or the core network device, or preconfigured in the UE, or may be predefined by using a protocol. The first threshold may be greater than, less than, or equal to the second threshold. This is not limited. The first parameter is, for example, a parameter of the UE, and the first parameter may indicate a motion amplitude of the UE. For example, if the UE performs the first service, the first parameter can indicate a motion amplitude of the UE when the UE performs the first service. For example, if it is determined that a motion amplitude of the UE is large based on the first parameter, it may be considered that a corresponding downlink data packet needs to be accelerated for transmission, to reduce a network transmission delay, and enable a user to see a new image obtained through a view offset as soon as possible; or if it is determined that a motion amplitude of the UE is small based on the first parameter, a corresponding downlink data packet may not need to be accelerated for transmission, to reduce impact on a network.

For example, the UE is a helmet, and the first parameter is, for example, a rotational angular velocity of the helmet. When the rotational angular velocity is large, for example, greater than or equal to the first threshold, it indicates that a motion amplitude of the user is large, and a downlink data packet corresponding to the large rotational angular velocity may be accelerated for transmission; or when the rotational angular velocity is small, for example, less than the first threshold, it indicates that a motion amplitude of the user is small, and a downlink data packet corresponding to the small rotational angular velocity may not need to be accelerated for transmission. Alternatively, when a variation of the rotational angular velocity is large (for example, the UE may compare the current rotational angular velocity with a rotational angular velocity determined on a previous collection occasion, to determine the variation), for example, greater than or equal to the second threshold, it indicates that a motion amplitude of the user is large, and a downlink data packet corresponding to the large rotational angular velocity may be accelerated for transmission; or when a variation of the rotational angular velocity is small, for example, less than the second threshold, it indicates that a motion amplitude of the user is small, and a downlink data packet corresponding to the small rotational angular velocity may not need to be accelerated for transmission.

It can be learned from how the UE determines when to start accelerated transmission of the downlink data packet that, when the UE sends the first indication information to the access network device, execution of the first service may have just started, and transmission of the data packet corresponding to the first service may not have started yet. In this case, all downlink data packets of the first service may be accelerated for transmission. For example, in a process of executing the first service, if the user keeps a large motion amplitude, all downlink data packets of the first service may be accelerated for transmission; or only a part of downlink data packets of the first service may be accelerated for transmission. For example, after some downlink data packets of the first service are accelerated for transmission, if a motion amplitude of the user decreases, the remaining downlink data packets of the first service may not be accelerated for transmission.

Alternatively, when the UE sends the first indication information to the access network device, the first service may have been executed for a period of time. In this case, before the first indication information is sent, accelerated transmission is not performed on the downlink data packet of the first service. In other words, in this case, a part of downlink data packets of the first service are accelerated for transmission.

It can be learned that this embodiment of this application can implement accelerated transmission of all or a part of downlink data packets of a service. To be specific, in this embodiment of this application, accelerated transmission may be performed on a downlink data packet that needs to be accelerated based on a service requirement (or based on a motion status of the user), and for a downlink data packet that does not need to be accelerated for transmission, accelerated transmission may not be performed. This enables the user to see a new image in time, and reduces impact on the network.

If when to start accelerated transmission is performed by an application layer of the UE, optionally, when it is determined that acceleration needs to be started, the application layer may send an indication to an access stratum of the UE, to indicate that accelerated transmission needs to be performed. After receiving the indication from the application layer, the access stratum may send the first indication information to the access network device. For example, a communication layer in the access stratum may send the first indication information to the access network device. The access stratum is, for example, a protocol layer managed by a modem (modem) of the UE. For example, the access stratum may include one or more of the following protocol layers: a service data adaptation protocol (service data adaptation protocol, SDAP) layer, a packet data convergence protocol (packet data convergence protocol, PDCP) layer, a radio link control (radio link control, RLC) layer, or a MAC layer. The communication layer in the access stratum is, for example, any protocol layer in the access stratum. For example, a PDCP layer, an RLC layer, or a MAC layer may be used as the communication layer.

Optionally, the first indication information may be included in RRC control signaling, or may be included in user plane control signaling, or may be included in a user plane data packet. If the first indication information is included in the user plane data packet, in an optional manner, the first indication information may be included in a header of the user plane data packet.

Optionally, the user plane control signaling may include one or more of the following: MAC control signaling, RLC control signaling, PDCP control signaling, or physical layer control signaling. Alternatively, the user plane control signaling may further include other user plane control signaling, or the foregoing user plane control signaling may have other names (for example, names of some protocol layers may be changed). This is not limited herein.

Optionally, the user plane data packet may include one or more of the following: a MAC data packet, an RLC data packet, a PDCP data packet, or an SDAP data packet. Alternatively, the user plane data packet may further include another user plane data packet, or the foregoing user plane data packet may have another name (for example, names of some protocol layers may be changed). This is not limited herein.

The first service may include both an uplink data packet and a downlink data packet. Therefore, a sending manner of the first indication information is carrying the first indication information in a user plane data packet (the uplink data packet) for sending. Optionally, the uplink data packet for sending the first indication information may have an association relationship with a downlink data packet to be accelerated. For example, the first service is a VR service, and the UE sends the first indication information when determining that a value of the first parameter is greater than the first threshold (or a variation of the value of the first parameter is greater than the second threshold). A user plane data packet including the first indication information may be a user plane data packet corresponding to the first parameter greater than the first threshold. In other words, data included in the user plane data packet may be collected when the value of the first parameter is greater than the first threshold. A data packet to be accelerated for transmission is also a downlink data packet corresponding to the first parameter greater than the first threshold. For example, after the user plane data packet corresponding to the first parameter greater than the first threshold arrives at the application server, the application server performs image rendering based on the user plane data packet, and sends a rendered image to the UE through the downlink data packet. The downlink data packet is a downlink data packet that needs to be accelerated.

If the UE determines that there is a downlink data packet that needs to be accelerated, in addition to sending the first indication information to the access network device, the UE may further perform other processing. For example, the UE may adjust a discontinuous reception (discontinuous reception, DRX) parameter of the UE, or the UE may deactivate a DRX mechanism of the UE, or the UE may shorten a DRX cycle of the UE; and/or the UE may deactivate a GAP of the UE.

DRX may be configured for the UE, so that power consumption can be reduced. In the DRX mechanism, the UE wakes up only in DRX active time to receive data, and in DRX inactive time, the UE may enter a sleep (sleep) state, and in the sleep state, the UE may not perform a receiving operation. If there are downlink data packets that need to be accelerated for transmission, after the downlink data packets accelerated for transmission arrives at the access network device, the access network device may quickly schedule these downlink data packets. If the UE is in the DRX inactive time in this case, the UE may not receive these downlink data packets, causing a packet loss. Therefore, in this embodiment of this application, the UE may adjust the DRX parameter. For example, the UE may adjust the DRX parameter in any one of the following three manners.

### (1) Shorten the DRX inactive time and/or prolong the DRX active time.

For example, after sending an acceleration indication, the UE may be considered to continuously remain in the DRX active time until acceleration is stopped. When acceleration is stopped or after acceleration is stopped, the UE may restore to a normal DRX active time determining rule (for the DRX active time determining rule, refer to the DRX active time determining rule described in the 3GPP technical specification (technical specification, TS) 38321). After receiving the acceleration indication from the UE, the access network device also considers that the UE will remain in the DRX active time until the acceleration is stopped.

### (2) If the DRX mechanism is deactivated, the UE may not enter the sleep state.

For example, deactivating DRX means that the UE may retain a DRX configuration parameter, but does not determine DRX active time, DRX deactivation time, or the like, and the UE continuously monitors downlink scheduling until acceleration is stopped. When acceleration is stopped or after acceleration is stopped, the UE reactivates the DRX mechanism based on the retained DRX configuration parameter. Compared with directly deconfiguring the DRX configuration, retaining the DRX configuration parameter can reduce processes of DRX deconfiguration and parameter reconfiguration, and improve efficiency of activating the DRX mechanism.

### (3) Shorten the DRX cycle.

In this case, even if the UE enters the sleep state, the sleep state lasts for a shorter time, active time occurs at a higher frequency, and impact on receiving the downlink data packet by the UE is smaller. The DRX cycle to be shortened may be determined by the UE, predefined by using a protocol, or configured by the access network device.

Regardless of which DRX parameter adjustment manner is used, the UE can be in a non-sleep state for maximized time by performing corresponding processing on the DRX mechanism, to prepare to receive a downlink data packet accelerated for transmission from the network side, and avoid missing data accelerated for transmission from the network side to the UE due to the UE being in the sleep state, thereby reducing a packet loss rate. Alternatively, the UE may adjust the DRX parameter in a manner other than the foregoing three manners. This is not limited herein.

Considering that the access network device may accelerate transmission of the downlink data packet only after the UE sends the first indication information for a period of time, optionally, the UE may adjust the DRX parameter when a first time offset after sending of the first indication information arrives. In this way, parameter adjustment by the UE is more in accordance with an accelerated transmission mechanism of the downlink data packet, and the UE can also reduce power consumption by using the normal DRX mechanism for maximized time. The first time offset may be determined by the UE. Optionally, the first time offset is related to the foregoing time offset A. For example, the first time offset is equal to the time offset A.

Optionally, DRX adjustment (for example, shortening the DRX inactive time and/or prolonging the DRX active time, or deactivating the DRX mechanism, or shortening the DRX cycle) by the UE may be autonomously determined by the UE, or may be performed under an indication of the access network device. For example, after receiving the first indication information, the access network device may send second indication information to the UE, where the second indication information may indicate to adjust a DRX parameter of the UE (for example, indicate to shorten DRX inactive time and/or prolong DRX active time, or indicate to deactivate a DRX mechanism of the UE, or indicate to shorten a DRX cycle of the UE); and after receiving the second indication information, the UE may perform corresponding processing based on the second indication information. If the UE shortens the DRX cycle of the UE based on the second indication information, the shortened cycle may also be indicated by using the second indication information, or may be autonomously determined by the UE, predefined by using a protocol, or the like.

As described above, if the UE determines that a downlink data packet needs to be accelerated, in addition to sending the first indication information to the access network device, the UE may further deactivate a GAP of the UE, where the GAP is time for the UE to perform measurement (for example, the measurement includes inter-frequency measurement and/or intra-frequency measurement) by interrupting data receiving at a current operating frequency. For example, within a time range of the GAP, the UE may switch to inter frequency (or switch to intra frequency, which may be outside a range of a bandwidth part (bandwidth part, BWP) where the UE currently operates) to perform measurement. Inter frequency refers to a frequency different from a frequency of a serving cell of the UE, and intra frequency refers to a frequency the same as the frequency of the serving cell of the UE. If the UE switches the frequency, it may not be able to receive or send signals in the serving cell of the UE. Therefore, if a downlink data packet accelerated for transmission arrives when the UE switches the frequency to perform measurement, the UE may not be able to receive the downlink data packet, resulting in a packet loss. Thus, in this embodiment of this application, the UE may deactivate the GAP, and the UE does not perform measurement, thereby improving a receiving success rate of the UE for the downlink data packet accelerated for transmission.

Optionally, the UE may deactivate the GAP when a third time offset after sending of the first indication information arrives. In this way, parameter adjustment by the UE is more in accordance with an accelerated transmission mechanism of the downlink data packet, and the UE can also complete measurement as much as possible. The third time offset may be determined by the UE. Optionally, the third time offset is related to the foregoing time offset A. For example, the third time offset is equal to the time offset A. Optionally, the third time offset may be equal to or not equal to the first time offset.

Optionally, GAP adjustment (for example, deactivating the GAP) by the UE may be autonomously determined by the UE, or may be performed under an indication of the access network device. For example, after receiving the first indication information, the access network device may send third indication information to the UE, where the third indication information may indicate to deactivate the gap; and after receiving the third indication information, the UE may deactivate the gap based on the third indication information.

As described above, to receive the downlink data packet to be accelerated for transmission, the UE may adjust a corresponding parameter (for example, DRX and/or GAP). Optionally, to accelerate transmission of the downlink data packet, the access network device may also perform corresponding processing.

For example, in addition to sending the downlink data packet to be accelerated for transmission, the access network device also needs to send a downlink data packet that does not need to be accelerated for transmission. For example, a part of downlink data packets of the first service need to be accelerated for transmission, while other downlink data packets do not need to be accelerated for transmission. Optionally, the access network device may also shorten scheduling time for downlink data packets that do not need to be accelerated for transmission and that are received before the downlink data packet to be accelerated for transmission arrives, so that these downlink data packets are sent as early as possible, to reduce a probability that these downlink data packets block the downlink data packet to be accelerated for transmission.

The foregoing describes a process of accelerating transmission of the downlink data packet. Through accelerated transmission of the downlink data packet, the downlink data packet can be transmitted as soon as possible when a motion amplitude of the user is large, thereby reducing a network transmission delay and improving user experience. A motion status of the user may change at any time. For example, if a motion amplitude of the user is large at a moment, the motion amplitude may decrease at a next moment. In this embodiment of this application, if a motion amplitude of the user is small, a corresponding downlink data packet may not need to be accelerated for transmission, to reduce network pressure. Therefore, optionally, this embodiment of this application may further include S303: The UE sends fourth indication information to the access network device, and correspondingly, the access network device receives the fourth indication information. The fourth indication information may indicate to stop accelerated transmission of the downlink data packet.

For example, if the fourth indication information does not indicate a related service or radio bearer, it may be considered by default that the fourth indication information corresponds to all radio bearers configured by the access network device for the UE, for example, the first radio bearer is included. To be specific, the fourth indication information indicates to stop accelerated transmission of the downlink data packet, and based on the fourth indication information, the access network device may determine to stop accelerated transmission of a downlink data packet of a service transmitted on any radio bearer configured by the access network device for the UE, and to perform normal transmission.

Alternatively, if the fourth indication information does not indicate a related service or radio bearer, but the fourth indication information is sent on a corresponding radio bearer, it may be considered by default that the fourth indication information corresponds to the radio bearer for sending the fourth indication information. For example, if the fourth indication information indicates to stop accelerated transmission of the downlink data packet, and the fourth indication information is sent to the access network device on the first radio bearer, based on the fourth indication information, the access network device may determine that accelerated transmission of the downlink data packet of the service transmitted on the first radio bearer needs to be stopped.

Alternatively, if the fourth indication information may indicate a related service or radio bearer, based on the fourth indication information, the access network device may determine that accelerated transmission of downlink data packets of a service transmitted on the service or the radio bearer needs to be stopped. For example, if the fourth indication information may indicate to stop accelerated transmission of the downlink data packet of the first service, the access network device may stop accelerated transmission of the downlink data packet of the first service. The fourth indication information needs to indicate the first service, and a manner of indicating the first service may be similar to that of indicating the first service by using the first indication information. For details, refer to the foregoing descriptions.

Optionally, in addition to indicating to stop accelerated transmission of the downlink data packet (or indicating to stop accelerated transmission of the downlink data packet of the first service), the fourth indication information may further indicate other information. For example, the fourth indication information may further indicate time at which a downlink data packet whose accelerated transmission is to be stopped is expected to arrive at the access network device; and based on the time indicated by the fourth indication information, the access network device may determine when to stop accelerated transmission, or determine a downlink data packet from which accelerated transmission is stopped. The fourth indication information needs to indicate the time. For example, an indication manner is indicating a moment, or indicating a time offset, for example, a time offset B. For content such as a manner in which the fourth indication information indicates the time and a manner in which the UE determines the time, refer to the foregoing related descriptions of the first indication information.

Optionally, the access network device needs to determine when to stop accelerated transmission of the downlink data packet, or determine a downlink data packet from which accelerated transmission is stopped. This may be determined based on the fourth indication information, or may be determined in another manner. If the fourth indication information does not indicate time, the access network device may determine that a downlink data packet (or a downlink data packet corresponding to the first radio bearer, or a downlink data packet corresponding to the first service) received from time at which the fourth indication information is received is the downlink data packet whose accelerated transmission needs to be stopped; and a downlink data packet received before the time is still a downlink data packet that needs to be accelerated for transmission.

For another example, if the fourth indication information does not indicate time, the access network device may determine that a downlink data packet (or a downlink data packet corresponding to the first radio bearer, or a downlink data packet corresponding to the first service) received from time when a fourth time offset starting from time at which the fourth indication information is received arrives is the downlink data packet that needs to be accelerated for transmission; and a downlink data packet received before the time is not the downlink data packet that needs to be accelerated for transmission. The fourth time offset may be set by the access network device, or configured by the core network device, or predefined or preconfigured in the access network device by using a protocol.

Alternatively, in addition to the foregoing described manner, the access network device may determine when to stop accelerated transmission of the downlink data packet, or determine a downlink data packet from which accelerated transmission is stopped in another manner. For example, the access network device may perform determining based on seventh indication information, and the seventh indication information is, for example, included in the downlink data packet. For example, when the application server or the core network device sends a downlink data packet of the first service, if accelerated transmission of a downlink data packet (for example, a second downlink data packet) needs to be stopped, the application server or the core network device may carry seventh indication information in the second downlink data packet (for example, the seventh indication information is carried in a header of the second downlink data packet), where the seventh indication information may occupy one or more bits, and the seventh indication information may indicate that the second downlink data packet is a downlink data packet whose accelerated transmission is stopped. The access network device may determine that accelerated transmission of the second downlink data packet needs to be stopped based on the seventh indication information. Optionally, for a downlink data packet whose accelerated transmission ends, that is, a downlink data packet that does not need to be accelerated for transmission, the application server or the core network device may carry the seventh indication information in each of the downlink data packets, or may carry the seventh indication information in one or more downlink data packets that are first sent.

For example, when the application server sends a downlink data packet of the first service, if a downlink data packet is the downlink data packet whose accelerated transmission needs to be stopped, the application server may carry seventh indication information in a header of the downlink data packet, and based on whether the header of the data packet received from the application server carries the seventh indication information, the core network device may determine whether accelerated transmission of a downlink data packet needs to be stopped. For example, if the application server sets seventh indication information in a header of a downlink data packet, the core network device may determine that acceleration of the downlink data packet needs to be stopped based on the seventh indication information. If the core network device determines that accelerated transmission of a downlink data packet needs to be stopped, the core network device may set seventh indication information in a header of the downlink data packet sent to the access network device. An implementation of the seventh indication information set by the core network device may be the same as that of the seventh indication information set by the application server, for example, both are 1-bit information. Alternatively, implementations of the two pieces of seventh indication information may be different. This is not specifically limited. However, the two pieces of seventh indication information indicate to stop accelerated transmission. For example, the downlink data packet from the application server is a downlink data packet 3, and a header of the downlink data packet 3 carries seventh indication information; and the core network device encapsulates the downlink data packet 3. For example, the core network device adds a header to the downlink data packet 3 to obtain a downlink data packet 4. Because the core network device parses the header of the downlink data packet 3 to obtain the seventh indication information, the newly added header in the downlink data packet 4 may carry the seventh indication information, and the core network device sends the downlink data packet 4 to the access network device. The access network device may determine that the downlink data packet 4 is the downlink data packet whose accelerated transmission is stopped based on the seventh indication information in the downlink data packet 4.

Alternatively, for example, the core network device may not need to re-encapsulate the downlink data packet, and may not need to determine whether acceleration of the downlink data packet needs to be stopped. For example, the core network device directly forwards the downlink data packet from the application server to the access network device. In this case, the access network device may determine that accelerated transmission of the downlink data packet needs to be stopped based on a header of the received downlink data packet. For example, the downlink data packet from the application server is a downlink data packet 3, and a header of the downlink data packet 3 carries seventh indication information; the core network device forwards the downlink data packet 3 to the access network device; and the access network device may determine that the downlink data packet 3 is the downlink data packet whose accelerated transmission is to be stopped based on the seventh indication information in the downlink data packet 3.

Alternatively, the access network device may determine that accelerated transmission of the downlink data packet needs to be stopped based on that the downlink data packet does not carry an acceleration indication. For example, when the application server or the core network device sends a downlink data packet of the first service, if accelerated transmission of a downlink data packet (for example, the second downlink data packet) needs to be stopped, the application server or the core network device may not carry an acceleration indication in the second downlink data packet. The second downlink data packet does not carry the acceleration indication, to indicate that the second downlink data packet is the downlink data packet whose accelerated transmission is stopped. The access network device may determine that accelerated transmission of the second downlink data packet needs to be stopped based on that the second downlink data packet does not carry the acceleration indication. Optionally, for downlink data packets whose accelerated transmission ends, that is, downlink data packets that do not need to be accelerated for transmission, the application server or the core network device does not carry the acceleration indication in each of the downlink data packets.

For example, when the application server sends a downlink data packet of the first service, if a downlink data packet is the downlink data packet whose accelerated transmission needs to be stopped, the application server may not carry an acceleration indication in a header of the downlink data packet, and based on whether the header of the data packet received from the application server carries the acceleration indication, the core network device may determine whether accelerated transmission of a downlink data packet needs to be stopped. For example, if the application server does not set an acceleration indication in a header of a downlink data packet, the core network device may determine that acceleration of the downlink data packet needs to be stopped based on this. If the core network device determines that accelerated transmission of a downlink data packet needs to be stopped, the core network device may not set an acceleration indication in a header of the downlink data packet sent to the access network device. For example, the downlink data packet from the application server is a downlink data packet 3, and a header of the downlink data packet 3 does not carry an acceleration indication; and the core network device encapsulates the downlink data packet 3. For example, the core network device adds a header to the downlink data packet 3 to obtain a downlink data packet 4. Because the core network device parses the header of the downlink data packet 3 and does not obtain the acceleration indication, the newly added header in the downlink data packet 4 may not carry the acceleration indication, and the core network device sends the downlink data packet 4 to the access network device. The access network device may determine that the downlink data packet 4 is the downlink data packet whose accelerated transmission is stopped based on that the downlink data packet 4 does not carry the acceleration indication.

Alternatively, for example, the core network device may not need to re-encapsulate the downlink data packet, and may not need to determine whether acceleration of the downlink data packet needs to be stopped. For example, the core network device directly forwards the downlink data packet from the application server to the access network device. In this case, the access network device may determine that accelerated transmission of the downlink data packet needs to be stopped based on a header of the received downlink data packet. For example, the downlink data packet from the application server is a downlink data packet 3, and a header of the downlink data packet 3 does not carry an acceleration indication; the core network device forwards the downlink data packet 3 to the access network device; and the access network device may determine that the downlink data packet 3 is the downlink data packet whose accelerated transmission is stopped based on that the downlink data packet 3 does not carry the acceleration indication.

An optional determining manner in which the application server needs to determine whether to stop accelerating the downlink data packet is: determining whether to stop accelerated transmission of the downlink data packet based on a first parameter. For example, if a value of the first parameter is less than a first threshold, or a variation of the value of the first parameter is less than a second threshold, accelerated transmission of the downlink data packet is stopped. The first threshold and/or the second threshold may be set by the application server, or configured by the access network device or the core network device, or preconfigured in the application server, or may be predefined by using a protocol. For descriptions of content such as how the application server determines the value of the first parameter, refer to the foregoing description.

If the UE determines that acceleration of the downlink data packet is stopped, in addition to sending the fourth indication information to the access network device, the UE may further perform other processing. For example, the UE may activate a DRX mechanism of the UE, or restore a normal DRX active time determining rule (for example, prolonging DRX inactive time and/or shortening DRX active time), or the UE may prolong a DRX cycle of the UE; and/or the UE may activate a GAP of the UE.

Processing of the UE on the DRX may correspond to processing of the UE on the DRX when there is a downlink data packet that needs to be accelerated for transmission. For example, when there is a downlink data packet that needs to be accelerated for transmission, the UE shortens DRX inactive time; and when determining that accelerated transmission of the downlink data packet is stopped, the UE may restore DRX inactive time (for example, prolong the DRX inactive time), for example, enable restored DRX inactive time to be consistent with the DRX inactive time before adjustment. For another example, when there is a downlink data packet that needs to be accelerated for transmission, the UE prolongs DRX active time; and when determining that accelerated transmission of the downlink data packet is stopped, the UE may restore DRX active time (for example, shorten the DRX active time), for example, enable restored DRX active time to be consistent with the DRX active time before adjustment. For another example, when there is a downlink data packet that needs to be accelerated for transmission, the UE deactivates a DRX mechanism; and when determining that accelerated transmission of the downlink data packet is stopped, the UE may activate the DRX mechanism. For another example, when there is a downlink data packet that needs to be accelerated for transmission, the UE shortens a DRX cycle of the UE; and when determining that accelerated transmission of the downlink data packet is stopped, the UE may restore a DRX cycle of the UE, for example, enable a restored DRX cycle to be consistent with the DRX cycle before adjustment. The DRX is restored, so that the UE can reduce power consumption.

Considering that the access network device may stop accelerated transmission of the downlink data packet only after the UE sends the fourth indication information for a period of time, optionally, the UE may prolong the DRX inactive time and/or shorten the DRX active time, or activate the DRX mechanism, or prolong the DRX cycle when a fifth time offset after sending of the fourth indication information arrives. In this way, parameter adjustment by the UE is more in accordance with an accelerated transmission mechanism of the downlink data packet, and a case in which the UE cannot receive a downlink data packet whose transmission has not been completed due to DRX adjustment is avoided as much as possible, thereby reducing a packet loss rate. The fifth time offset may be determined by the UE. Optionally, the fifth time offset is related to the foregoing time offset B. For example, the fifth time offset is equal to the time offset B.

Optionally, DRX adjustment (for example, prolonging the DRX inactive time and/or shortening the DRX active time, or activating the DRX mechanism, or prolonging the DRX cycle) by the UE may be autonomously determined by the UE, or may be performed under an indication of the access network device. For example, after receiving the fourth indication information, the access network device may send fifth indication information to the UE, where the fifth indication information may indicate to adjust a DRX parameter of the UE (for example, indicate to restore a normal DRX active time determining rule (for example, indicate to prolong DRX inactive time and/or shorten DRX active time), or indicate to activate a DRX mechanism of the UE, or indicate to prolong a DRX cycle of the UE); and after receiving the fifth indication information, the UE may perform corresponding processing based on the fifth indication information. If the UE prolongs the DRX cycle of the UE based on the fifth indication information, the prolonged cycle may also be indicated by using the fifth indication information, or may be autonomously determined by the UE or predefined by using a protocol, or the UE may restore a DRX cycle to the DRX cycle before the adjustment.

As described above, if the UE determines that there is a downlink data packet whose acceleration is stopped, in addition to sending the fourth indication information to the access network device, the UE may further activate a GAP of the UE, so that the UE can perform measurement, to meet a requirement such as cell handover or cell reselection.

Optionally, the UE may activate the GAP when a sixth time offset after sending of the fourth indication information arrives. In this way, parameter adjustment by the UE is more in accordance with an accelerated transmission mechanism of the downlink data packet, and a case in which the UE cannot receive a downlink data packet whose transmission has not been completed due to measurement is avoided as much as possible, thereby reducing a packet loss rate. The sixth time offset may be determined by the UE. Optionally, the sixth time offset is related to the foregoing time offset B. For example, the sixth time offset is equal to the time offset B. Optionally, the sixth time offset may be equal to or not equal to the fifth time offset.

Optionally, GAP adjustment (for example, activating the GAP) by the UE may be autonomously determined by the UE, or may be performed under an indication of the access network device.

For example, after receiving the fourth indication information, the access network device may send sixth indication information to the UE, where the sixth indication information may indicate to activate the GAP; and after receiving the sixth indication information, the UE may activate the GAP based on the sixth indication information.

For example, for the first service, when acceleration of the downlink data packet is stopped, transmission of the downlink data packet of the first service may have been completed, or the first service may have some downlink data packets to be transmitted. In this case, the remaining downlink data packets are transmitted based on a normal network transmission delay, and accelerated transmission is not required.

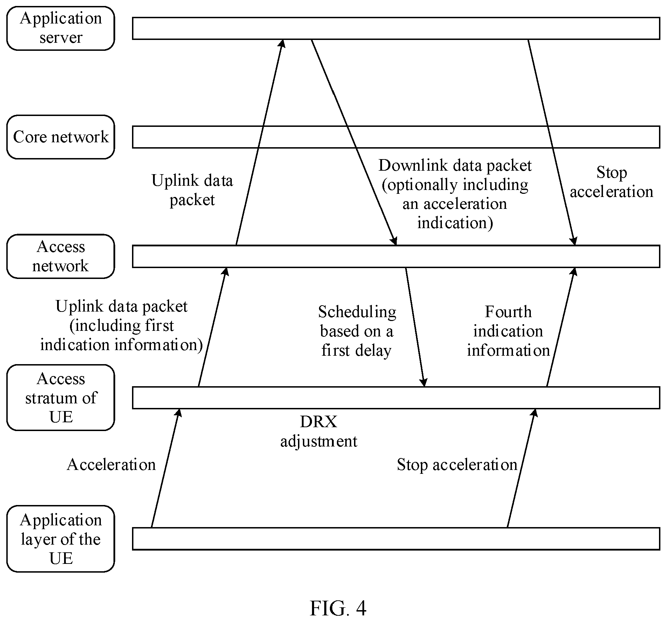

FIG. 4 is a diagram of an implementation process according to an embodiment of this application. For example, if an application layer of UE determines that there is a downlink data packet that needs to be accelerated for transmission, the application layer of the UE may send an indication to an access stratum of the UE. After receiving the indication, the access stratum may send first indication information to an access network device (in FIG. 4, for example, the first indication information is included in an uplink data packet). The access network device sends the uplink data packet to the application server via a core network device. The application server may obtain a corresponding downlink data packet based on the uplink data packet, and send the downlink data packet to the access network device. Optionally, the downlink data packet may include an acceleration indication. The access network device may schedule the downlink data packet based on a first delay budget. In addition, after sending the first indication information (the uplink data packet), the UE may adjust a parameter of the UE, for example, DRX and/or GAP, so that the UE can receive the downlink data packet accelerated for transmission. When determining to stop acceleration, the application layer of the UE may send an indication to the access stratum of the UE. After receiving the indication, the access stratum may send fourth indication information to the access network device, to indicate to stop accelerated transmission. Optionally, the application server may also determine whether to stop acceleration. If the application server determines to stop acceleration, the application server may also carry seventh indication information in the downlink data packet, or may not carry the acceleration indication in the downlink data packet.

In the foregoing solution, the access network device may determine that there is a downlink data packet that needs to be accelerated for transmission based on the first indication information from the UE. In addition, the access network device may determine when to start accelerated transmission, or determine a downlink data packet from which accelerated transmission is started based on the first indication information or the downlink data packet from the core network device. In addition, the access network device may further have another implementation, and content described below is referred to as solution 1.

For example, the access network device may not need to determine whether there is a downlink data packet that needs to be accelerated for transmission based on an indication (for example, the first indication information) from the UE, but determine whether there is a downlink data packet that needs to be accelerated for transmission based on a downlink data packet from the core network device. For example, the access network device receives a first downlink data packet from the core network device (the first downlink data packet is, for example, directly forwarded by the core network device to the access network device, or may be encapsulated again after the core network device receives a downlink data packet from the application server, and for this, refer to the foregoing related description); and if the first downlink data packet includes an acceleration indication, the access network device may determine that there is a downlink data packet that needs to be accelerated for transmission, and/or determine that the first downlink data packet is the downlink data packet that needs to be accelerated for transmission. Optionally, if there are a plurality of downlink data packets that need to be accelerated for transmission, the application server or the core network device may carry the acceleration indication in each of the downlink data packets, or may carry the acceleration indication in one or more downlink data packets that are first sent. If only a part of the downlink data packets to be accelerated carry the acceleration indication, the access network device may maintain accelerated transmission when receiving no further indication (that is, an indication for stopping accelerated transmission).

In solution 1, optionally, the UE may not determine whether to accelerate transmission of the downlink data packet. If the access network device determines that there is a downlink data packet that needs to be accelerated for transmission, the access network device may send an indication to the UE, for example, send one or more of eighth indication information, second indication information, or third indication information. The eighth indication information may indicate to accelerate transmission of a downlink data packet, or indicate to accelerate transmission of a downlink data packet of a first service. For content indicated by the eighth indication information, a manner of sending the eighth indication information (for example, a radio bearer used for sending), and the like, refer to the description of the first indication information. Optionally, if the access network device sends the second indication information and/or the third indication information, the eighth indication information may not need to be sent, and the second indication information and/or the third indication information may implicitly indicate that there is a downlink data packet that needs to be accelerated for transmission.

Alternatively, in solution 1, the UE may autonomously determine whether to accelerate transmission of the downlink data packet. Optionally, if the UE determines to accelerate transmission of the downlink data packet, the UE may not need to send the first indication information to the access network device. For example, the UE may autonomously adjust a corresponding parameter (for example, DRX and/or GAP); or if the UE determines to accelerate transmission of the downlink data packet, the UE may send the first indication information to the access network device. In this case, the access network device may determine whether there is a downlink data packet that needs to be accelerated for transmission based on the first indication information and/or based on the downlink data packet from the core network device.

Optionally, in solution 1, the access network device may determine to stop accelerated transmission based on the fourth indication information from the UE. In addition, the access network device may determine when to stop accelerated transmission, or determine a downlink data packet from which accelerated transmission is stopped based on the fourth indication information or based on the downlink data packet from the core network device. In addition, the access network device may further have another implementation. For example, the access network device may not need to determine whether to stop accelerated transmission based on an indication (for example, the fourth indication information) from the UE, but determine whether to stop accelerated transmission based on the downlink data packet from the core network device. For example, the access network device receives a second downlink data packet from the core network device (the second downlink data packet is, for example, directly forwarded by the core network device to the access network device, or may be encapsulated again after the core network device receives a downlink data packet from the application server, and for this, refer to the foregoing related description); and if the second downlink data packet does not include the acceleration indication, or the second downlink data packet includes the seventh indication information, the access network device may determine to stop accelerated transmission, and/or determine that the second downlink data packet is the downlink data packet whose accelerated transmission needs to be stopped.

Optionally, the UE may not determine whether to stop accelerated transmission of the downlink data packet. If the access network device determines to stop accelerated transmission, the access network device may send an indication to the UE, for example, send one or more of ninth indication information, fifth indication information, or sixth indication information. The ninth indication information may indicate to stop accelerated transmission of the downlink data packet, or indicate to stop accelerated transmission of the downlink data packet of the first service. For content indicated by the ninth indication information, a manner of sending the ninth indication information (for example, which radio bearer is used to send the ninth indication information), and the like, refer to the description of the fourth indication information. Optionally, if the access network device sends the fifth indication information and/or the sixth indication information, the ninth indication information may not need to be sent, and the fifth indication information and/or the sixth indication information may implicitly indicate to stop accelerated transmission.

Alternatively, in solution 1, the UE may autonomously determine whether to stop accelerated transmission of the downlink data packet. Optionally, if the UE determines to stop accelerated transmission of the downlink data packet, the UE may not need to send the fourth indication information to the access network device. For example, the UE may autonomously adjust a corresponding parameter (for example, DRX and/or GAP); or if the UE determines to stop accelerated transmission of the downlink data packet, the UE may send the fourth indication information to the access network device. In this case, the access network device may determine to stop accelerated transmission based on the fourth indication information and/or the downlink data packet from the core network device.

For another implementation process of solution 1, refer to related descriptions of the embodiment shown in FIG. 3.

In this embodiment of this application, the UE may indicate the access network device to accelerate transmission of a downlink data packet. For example, the UE may notify the access network device of accelerated transmission of the downlink data packet when the UE considers that acceleration is required, and may not notify the access network device of accelerated transmission of the downlink data packet when the UE considers that acceleration is not required. For example, for a service, this embodiment of this application can enable accelerated transmission of a part of data packets of the service, and enable normal transmission of other data packets. In this way, a transmission delay of the data packets accelerated for transmission is small, for example, a black edge effect can be reduced. In addition, normal transmission of the other data packets can reduce impact on the network. This is equivalent to that this embodiment of this application implements a balance between network capacity and user experience in a sense.

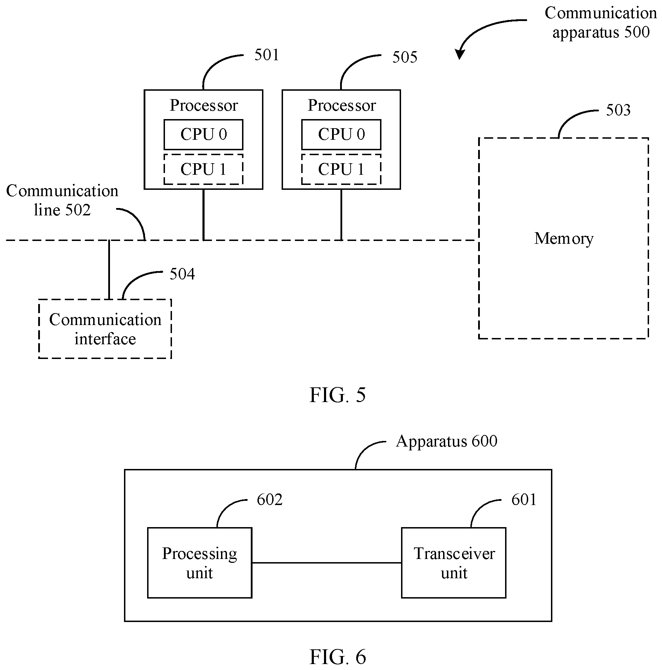

FIG. 5 is a diagram of a structure of a communication apparatus according to an embodiment of this application. The communication apparatus 500 may be a circuit system of the UE in the embodiment shown in FIG. 3, and is configured to implement the method corresponding to the UE in the foregoing method embodiments. Alternatively, the communication apparatus 500 may be a circuit system of the access network device in the embodiment shown in FIG. 3, and is configured to implement the method corresponding to the access network device in the foregoing method embodiments. Alternatively, the communication apparatus 500 may be a circuit system of the application server in the embodiment shown in FIG. 3, and is configured to implement the method corresponding to the application server in the foregoing method embodiments. For example, the circuit system is a chip system.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 500 includes one or more memories 503, configured to store instructions. Optionally, the memory 503 may further store data. The processor and the memory may be separately disposed, or may be integrated together.

Optionally, the communication apparatus 500 includes a communication line 502 and at least one communication interface 504. The memory 503, the communication line 502, and the communication interface 504 are all optional, and therefore are all represented by dashed lines in FIG. 5.

Optionally, the communication apparatus 500 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 500 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 501 may include a general-purpose central processing unit (central processing unit, CPU), a microprocessor, an application-specific integrated circuit (application-specific integrated circuit, ASIC), or one or more integrated circuits configured to control program execution of solutions of this application.

The communication line 502 may include a path along which information is transmitted between the foregoing components.

The communication interface 504 uses any apparatus like a transceiver, and is configured to communicate with another device or a communication network, such as the Ethernet, a radio access network (radio access network, RAN), a wireless local area network (wireless local area networks, WLAN), or a wired access network.

The memory 503 may be a read-only memory (read-only memory, ROM) or another type of static storage device capable of storing static information and instructions, a random access memory (random access memory, RAM), or another type of dynamic storage device capable of storing information and instructions; or may be an electrically erasable programmable read-only memory (electrically erasable programmable read-only memory, EEPROM), a compact disc read-only memory (compact disc read-only memory, CD-ROM), other compact disc storage, optical disc storage (including a compressed optical disc, a laser disc, an optical disc, a digital versatile disc, a Blu-ray disc, or the like), a magnetic disk storage medium, or another magnetic storage device; or any other medium capable of carrying or storing desired program code in a form of instructions or a data structure and capable of being accessed by a computer. However, this is not limited. The memory 503 may exist independently, and is connected to the processor 501 through the communication line 502. Alternatively, the memory 503 may be integrated with the processor 501.

The memory 503 is configured to store computer-executable instructions for executing the solutions of this application, and the processor 501 controls execution. The processor 501 is configured to execute the computer-executable instructions stored in the memory 503, to implement the steps performed by the UE, the access network device, or the application server in the embodiment shown in FIG. 3.

Optionally, the computer-executable instructions in this embodiment of this application may also be referred to as application program code. This is not specifically limited in this embodiment of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 505 shown in FIG. 5. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 5 is a chip, for example, a chip of the UE, a chip of the access network device, or a chip of the application server, the chip includes the processor 501 (and may further include the processor 505), the communication line 502, and the communication interface 504. Optionally, the chip may include the memory 503. Specifically, the communication interface 504 may be an input interface, a pin, a circuit, or the like. The memory 503 may be a register, a cache, or the like. The processor 501 and the processor 505 may be a general-purpose CPU, a microprocessor, an ASIC, or one or more integrated circuits configured to control program execution of the communication method in any one of the foregoing embodiments.

In embodiments of this application, an apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 6 is a diagram of an apparatus. The apparatus 600 may be the UE, the access network device, or the application server in the foregoing method embodiments, or a chip in the UE, a chip in the access network device, or a chip in the application server. The apparatus 600 includes a processing unit 602 and a transceiver unit 601.

It should be understood that the apparatus 600 may be configured to implement the steps performed by the UE, the access network device, or the application server in the communication method in embodiments of this application. For related features, refer to the embodiment shown in FIG. 3. Details are not described herein again.

Optionally, functions/implementation processes of the transceiver unit 601 and the processing unit 602 in FIG. 6 may be implemented by the processor 501 in FIG. 5 by invoking the computer-executable instructions stored in the memory 503. Alternatively, functions/implementation processes of the processing unit 602 in FIG. 6 may be implemented by the processor 501 in FIG. 5 by invoking the computer-executable instructions stored in the memory 503, and the functions/implementation processes of the transceiver unit 601 in FIG. 6 may be implemented through the communication interface 504 in FIG. 5.

Optionally, when the apparatus 600 is a chip or a circuit, functions/implementation processes of the transceiver unit 601 may alternatively be implemented through a pin, a circuit, or the like. Optionally, the transceiver unit 601 may include a sending unit and/or a receiving unit. The sending unit is configured to implement a sending function, and the receiving unit is configured to implement a receiving function. Alternatively, the transceiver unit 601 may be an entire module that can implement a sending function and/or a receiving function. Optionally, the transceiver unit 601 may be implemented by a transceiver.

This application further provides a computer-readable storage medium. The computer-readable storage medium stores a computer program or instructions. When the computer program or the instructions are run, the method performed by the UE, the access network device, or the application server in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the UE, the access network device, or the application server in any one of the foregoing method embodiments.

An embodiment of this application further provides a processing apparatus, including a processor and an interface. The processor is configured to perform the method performed by the UE, the access network device, or the application server in any one of the foregoing method embodiments.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the UE and/or the access network device and/or the application server may perform a part or all of the steps in embodiments of this application. These steps or operations are merely examples. In embodiments of this application, other operations or variations of the operations may be further performed. In addition, the steps may be performed in a sequence different from that presented in embodiments of this application, and not all of the operations in embodiments of this application may be necessarily performed.

## Claims

1. A communication method, wherein the method comprises:
receiving first configuration information, wherein the first configuration information is used to configure a first radio bearer, and the first radio bearer is used to transmit a data packet of a first service; and
sending first indication information to an access network apparatus, wherein the first indication information indicates to accelerate transmission of a downlink data packet of the first service.

2. The method according to claim 1, wherein the first configuration information is further used to configure a resource for transmitting the first indication information.

3. The method according to claim 1 or 2, wherein the first indication information indicates the first service by using one or more of the following:
an identifier of a data radio bearer for transmitting the first service;
an identifier of a quality of service QoS flow for transmitting the first service; or
an identifier of a logical channel for transmitting the first service.

4. The method according to any one of claims 1 to 3, wherein sending the first indication information to the access network apparatus comprises:
when an indication from an application layer is received, sending the first indication information to the access network apparatus.

5. The method according to any one of claims 1 to 4, wherein the first indication information further indicates time at which the downlink data packet to be accelerated for transmission is expected to arrive at the access network apparatus.

6. The method according to any one of claims 1 to 5, wherein the method further comprises:
adjusting a discontinuous reception DRX parameter of a terminal apparatus.

7. The method according to claim 6, wherein adjusting the DRX parameter of the terminal apparatus comprises:
when a first time offset after sending of the first indication information arrives, adjusting the DRX parameter of the terminal apparatus.

8. The method according to claim 6 or 7, wherein the method further comprises:
receiving second indication information from the access network apparatus, wherein the second indication information indicates to adjust the DRX parameter of the terminal apparatus.

9. The method according to any one of claims 1 to 8, wherein the method further comprises:
deactivating a measurement gap of the terminal apparatus, wherein the measurement gap is used for an inter-frequency measurement and/or an intra-frequency measurement.

10. The method according to claim 9, wherein the method further comprises:
receiving third indication information from the access network apparatus, wherein the third indication information indicates to deactivate the measurement gap.

11. The method according to any one of claims 1 to 10, wherein that the first indication information indicates to accelerate transmission of the downlink data packet comprises:
the first indication information indicates a first delay budget, and the first delay budget is used by the access network apparatus to schedule the downlink data packet to be accelerated for transmission.

12. The method according to any one of claims 1 to 11, wherein the first indication information is comprised in RRC control signaling, or comprised in user plane control signaling, or comprised in a header of a user plane data packet.

13. The method according to any one of claims 1 to 12, wherein the method further comprises:
sending fourth indication information to the access network apparatus, wherein the fourth indication information indicates to stop accelerated transmission of the downlink data packet of the first service.

14. The method according to claim 13, wherein the method further comprises:
adjusting the DRX parameter of the terminal apparatus.

15. The method according to claim 14, wherein the method further comprises:
receiving fifth indication information from the access network apparatus, wherein the fifth indication information indicates to adjust the DRX parameter of the terminal apparatus.

16. The method according to any one of claims 13 to 15, wherein the method further comprises:
activating a measurement gap of the terminal apparatus, wherein the measurement gap is used for an inter-frequency measurement and/or an intra-frequency measurement.

17. The method according to claim 16, wherein the method further comprises:
receiving sixth indication information from the access network apparatus, wherein the sixth indication information indicates to activate the measurement gap.

18. A communication method, wherein the method comprises:
sending first configuration information to a terminal apparatus, wherein the first configuration information is used to configure a first radio bearer, and the first radio bearer is used to transmit a data packet of a first service; and
receiving first indication information from the terminal apparatus, wherein the first indication information indicates to accelerate transmission of a downlink data packet of the first service.

19. The method according to claim 18, wherein the first configuration information is further used to configure a resource for transmitting the first indication information.

20. The method according to claim 18 or 19, wherein the method further comprises:
scheduling a first downlink data packet of the first service based on a first delay budget, wherein the first downlink data packet is a downlink data packet to be accelerated for transmission, the first delay budget belongs to a delay range indicated by a PDB of the first service, and a difference between the first delay budget and a lower limit of the delay range is less than a second threshold, or a PDB corresponding to the first delay budget is less than the PDB corresponding to the first service.

21. The method according to any one of claims 18 to 20, wherein the first indication information indicates the first service by using one or more of the following:
an identifier of a data radio bearer for transmitting the first service;
an identifier of a quality of service QoS flow for transmitting the first service; or
an identifier of a logical channel for transmitting the first service.

22. The method according to any one of claims 18 to 21, wherein the first indication information further indicates time at which the downlink data packet to be accelerated for transmission is expected to arrive at the access network apparatus.

23. The method according to claim 22, wherein the method further comprises:
accelerating transmission of the downlink data packet that is of the first service and that is received after the time indicated by the first indication information.

24. The method according to any one of claims 18 to 23, wherein the method further comprises:
sending second indication information to the terminal apparatus, wherein the second indication information indicates to adjust the DRX parameter of the terminal apparatus.

25. The method according to any one of claims 18 to 24, wherein the method further comprises:
sending third indication information to the terminal apparatus, wherein the third indication information indicates to deactivate a measurement gap of the terminal apparatus, and the measurement gap is used for an inter-frequency measurement and/or an intra-frequency measurement.

26. The method according to any one of claims 18 to 25, wherein that the first indication information indicates to accelerate transmission of the downlink data packet comprises:
the first indication information indicates the first delay budget, and the first delay budget is used by the access network apparatus to schedule the downlink data packet to be accelerated for transmission.

27. The method according to any one of claims 18 to 26, wherein the method further comprises:
determining that a downlink data packet that is of the first service and that is received from time when a first time offset after receiving of the first indication information arrives is the downlink data packet to be accelerated for transmission; or
determining the downlink data packet to be accelerated for transmission based on the time at which the downlink data packet to be accelerated for transmission is expected to arrive at the access network apparatus; or
receiving the first downlink data packet of the first service, wherein the first downlink data packet comprises an acceleration indication, and the acceleration indication indicates that the first downlink data packet is the downlink data packet to be accelerated for transmission.

28. The method according to claim 27, wherein the acceleration indication is information about the first delay budget, and the first delay budget is used by the access network apparatus to schedule the downlink data packet to be accelerated for transmission.

29. The method according to any one of claims 18 to 28, wherein the first indication information is comprised in RRC control signaling, or comprised in user plane control signaling, or comprised in a header of a user plane data packet.

30. The method according to any one of claims 18 to 29, wherein the method further comprises:
receiving fourth indication information from the terminal apparatus, wherein the fourth indication information indicates to stop accelerated transmission of the downlink data packet of the first service; or
receiving seventh indication information from a core network apparatus, wherein the seventh indication information indicates to stop accelerated transmission of the downlink data packet of the first service; or
receiving a third downlink data packet of the first service, wherein the third downlink data packet does not comprise an acceleration indication, to indicate to stop accelerated transmission of the downlink data packet of the first service.

31. The method according to claim 30, wherein the seventh indication information is comprised in a fourth downlink data packet of the first service.

32. The method according to claim 30 or 31, wherein the method further comprises:
sending fifth indication information to the terminal apparatus, wherein the fifth indication information indicates to adjust the DRX parameter of the terminal apparatus.

33. The method according to any one of claims 30 to 32, wherein the method further comprises:
sending sixth indication information to the terminal apparatus, wherein the sixth indication information indicates to activate a measurement gap of the terminal apparatus, and the measurement gap is used for an inter-frequency measurement and/or an intra-frequency measurement.

34. A communication apparatus, wherein the communication apparatus comprises a processing unit and a transceiver unit, and the processing unit is coupled to the transceiver unit, to perform the method according to any one of claims 1 to 17, or perform the method according to any one of claims 18 to 33.

35. A communication apparatus, wherein the communication apparatus comprises a processor coupled to a memory, the memory is configured to store a computer program, and the processor is configured to execute the computer program stored in the memory, to enable the communication apparatus to perform the method according to any one of claims 1 to 17, or enable the communication apparatus to perform the method according to any one of claims 18 to 33.

36. A computer-readable storage medium, wherein the computer-readable storage medium is configured to store a computer program, and when the computer program is run on a computer, the computer is enabled to perform the method according to any one of claims 1 to 17, or the computer is enabled to perform the method according to any one of claims 18 to 33.

37. A computer program product, wherein the computer program product comprises a computer program, and when the computer program is run on a computer, the computer is enabled to perform the method according to any one of claims 1 to 17, or the computer is enabled to perform the method according to any one of claims 18 to 33.

38. A chip, wherein the chip comprises:
a processor and an interface, wherein the processor is configured to invoke instructions from the interface and run the instructions, and when the processor executes the instructions, the method according to any one of claims 1 to 17 is implemented, or the method according to any one of claims 18 to 33 is implemented.
